(19) Europäisches Patentamt
European Patent Office
Office européen des brevets

(11) **EP 3 882 880 B1**

(12) **EUROPEAN PATENT SPECIFICATION**

(45) Date of publication and mention
of the grant of the patent:
**20.03.2024 Bulletin 2024/12**

(21) Application number: **19883588.6**

(22) Date of filing: **11.11.2019**

(51) International Patent Classification (IPC):
**G01C 7/04** *(2006.01)*        **B60W 40/06** *(2012.01)*

(52) Cooperative Patent Classification (CPC):
**B60W 40/06; B60W 40/13; E01C 23/01;**
**G01C 7/04;** B60W 2040/1315; B60W 2050/002;
B60W 2050/0031; B60W 2050/0057;
B60W 2510/222; B60W 2510/225; B60W 2520/16;
B60W 2530/10

(86) International application number:
**PCT/JP2019/044051**

(87) International publication number:
**WO 2020/100784 (22.05.2020 Gazette 2020/21)**

(54) **ROAD SURFACE PROFILE ESTIMATING DEVICE, ROAD SURFACE PROFILE ESTIMATING SYSTEM, ROAD SURFACE PROFILE ESTIMATING METHOD, AND ROAD SURFACE PROFILE ESTIMATING PROGRAM**

STRASSENOBERFLÄCHENPROFILSCHÄTZVORRICHTUNG, STRASSENOBERFLÄCHENPROFILSCHÄTZSYSTEM, STRASSENOBERFLÄCHENPROFILSCHÄTZVERFAHREN UND STRASSENOBERFLÄCHENPROFILSCHÄTZPROGRAMM

DISPOSITIF, SYSTÈME, PROCÉDÉ ET PROGRAMME D'ESTIMATION DE PROFIL DE SURFACE ROUTIÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.11.2018   JP 2018213088**

(43) Date of publication of application:
**22.09.2021 Bulletin 2021/38**

(73) Proprietor: **The University of Tokyo**
**Bunkyo-ku,**
**Tokyo 113-8654 (JP)**

(72) Inventors:
• **NAGAYAMA, Tomonori**
**Tokyo 113-8654 (JP)**
• **XUE, Kai**
**Tokyo 113-8654 (JP)**
• **ZHAO, Boyu**
**Tokyo 113-8654 (JP)**

(74) Representative: **Meissner Bolte Partnerschaft mbB**
**Patentanwälte Rechtsanwälte**
**Postfach 86 06 24**
**81633 München (DE)**

(56) References cited:
WO-A1-2017/154214      WO-A1-2018/199286
WO-A1-2018/199286      JP-A- H0 755 469
JP-A- 2004 110 590      JP-A- 2007 257 380
JP-A- 2010 060 489      JP-A- 2011 070 384
JP-A- 2011 128 844      US-A- 5 065 618

## Description

## Technical Field

The present invention relates to a road surface profile estimating device, a road surface profile estimating system, a road surface profile estimating method, and a road surface profile estimating program.

## Background Art

In the related art, in order to evaluate a vertical shape of a road surface (hereinafter, referred to as a road surface profile), an unevenness of the road surface may be measured and an index such as international roughness index (IRI) may be calculated. Information regarding the road surface profile may be used to determine whether the road surface needs repair or to evaluate the comfort during traveling by a vehicle.

Patent Document 1 described below discloses a road surface evaluating device that records a pitching angular velocity of a vehicle and GPS information in synchronization with each other, estimates an acceleration response by using an angular velocity response and a transfer function, and estimates an international roughness index by using the estimated acceleration response and a correlation function.

Citation List

Patent Document

Patent Document 1: Japanese Patent No. 6132304

Application publication WO 2018/199286 A1 aims to provide a road surface profile estimating device capable of accurately estimating a profile of any road surface, including ordinary roads, using a general purpose vehicle. A road surface profile estimating device is provided with: an acquiring unit which acquires an acceleration in a vertical direction and an angular velocity relating to a pitch axis; a first calculating unit which calculates a displacement in the vertical direction, and calculates an angular displacement relating to the pitch axis; a predicting unit which predicts time evolution of a state variable of a vehicle on the basis of a simulation model; a second calculating unit which calculates, from the state variable, the acceleration, angular velocity, displacement, and angular displacement on the basis of an observation model; an updating unit which updates the state variable by means of data assimilation between the acceleration and angular velocity acquired by the acquiring unit, the displacement and angular displacement calculated by the first calculating unit, and the acceleration, angular velocity, displacement and angular displacement calculated by the second calculating unit; and an estimating unit which estimates the road surface profile on the basis of the state variable.

## Summary

Technical Problem

A road surface profile may be estimated by using a simulation model such as a quarter car model or a half car model. Here, the simulation model includes a plurality of parameters such as a parameter representing the inertial moment of a vehicle and a parameter representing a damping coefficient of the damper.

In the related art, the plurality of parameters included in the simulation model have been estimated from the actual measurement of a vehicle or a response when climbing over a hump having a known shape. However, for example, the inertial moment of the vehicle cannot be easily measured, and, in a case where the response when climbing over a hump of a known shape is used, it is difficult to keep experimental conditions such as a vehicle velocity constant, or the response is different from that during actual traveling, and thus a relatively large estimation error may occur.

Therefore, the present invention provides a road surface profile estimating device, a road surface profile estimating system, a road surface profile estimating method, and a road surface profile estimating program capable of estimating a road surface profile and also determining a plurality of parameters included in a simulation model.

Solution to Problem

According to an aspect of the present invention, there is provided a road surface profile estimating device as defined in claim 1.

According to the aspect, the road surface profiles are estimated under the first condition and the second condition, and the plurality of parameters included in the simulation model are determined such that the difference between the road surface profiles estimated under both conditions is reduced. Therefore, the plurality of parameters included in the simulation model can be determined together with the estimation of the road surface profiles.

In the above aspect, the update unit may update a variance-covariance matrix of noise added to the state variables in the simulation model and a variance-covariance matrix of noise added to the observation values of the physical quantities in the observation model on the basis of a difference between the physical quantities acquired by the acquisition unit and the physical quantities calculated by the calculation unit.

According to the aspect, the variance-covariance matrix of noise added to the state variables in the simulation model and the variance-covariance matrix of noise added to the observation values of the physical quantities in the observation model are dynamically updated. Therefore, a road surface profile can be stably estimated by removing dependence on initial values of the variance-covariance matrices.

According to the invention, the simulation model is a half car model for the vehicle, the profile of the road surface estimated under the first condition is a profile of the road surface estimated on the basis of variables representing a vertical displacement and velocity of a front tire of the half car model, the profile of the road surface estimated under the second condition is a profile of the road surface estimated on the basis of variables representing a vertical displacement and velocity of a rear tire of the half car model, and the evaluation function includes a difference between a first function calculated from the variables representing the vertical displacement and velocity of the front tire and a second function calculated from the variables representing the vertical displacement and velocity of the rear tire.

According to the aspect, a plurality of parameters included in the simulation model can be determined under the request that the road surface profile estimated on the basis of the variables representing the vertical displacement and velocity of the front tire and the road surface profile estimated on the basis of the variables representing the vertical displacement and velocity of the rear tire are required to match each other.

In the above aspect, the first function may be a power spectral density of the profile of the road surface calculated from the variables representing the vertical displacement and velocity of the front tire, and the second function may be a power spectral density of the profile of the road surface calculated from the variables representing the vertical displacement and velocity of the rear tire.

According to the aspect, the power spectral densities are compared with each other, and thus it is possible to determine the plurality of parameters included in the simulation model without correcting the fact that the road surface profile calculated from the variables representing the vertical displacement and velocity of the front tire and the road surface profile calculated from the variables representing the vertical displacement and velocity of the rear tire are estimated to deviate by a wheelbase length.

In the above aspect, the determination unit may perform regression analysis in which a logarithm of the power spectral density calculated by using candidate values for the plurality of parameters is used as a dependent variable and a logarithm of a frequency is used as an independent variable, and determine whether or not to employ the candidate values on the basis of comparison between a determination coefficient in the regression analysis and a threshold value.

According to the aspect, it is possible to determine a plurality of parameters more accurately by excluding a case where an absolute value of the evaluation function calculated by using the candidate values for the plurality of parameters is small but deviates from a true value.

In the above aspect, the first function may be a value of variables representing a vertical displacement of the front tire at a predetermined time point, and the second function may be a value of variables representing a vertical displacement of the rear tire at a time point obtained by adding, to the predetermined time point, a value that is obtained by dividing a distance from the front tire to the rear tire by a velocity of the vehicle at the predetermined time point.

According to the aspect, it is corrected that the variable representing the vertical displacement of the front tire and the variable representing the vertical displacement of the rear tire are estimated to deviate by a wheelbase length, and thus a plurality of parameters included in the simulation model can be determined.

In the above aspect, the determination unit may determine the plurality of parameters by using a genetic algorithm.

According to the aspect, appropriate parameters can be efficiently determined even in a case where the number of the plurality of parameters increases and a complete search is difficult.

In the above aspect, the simulation model may be a model representing the time evolution of the state variables by using linear transform of the state variables and Gaussian noise, the observation model may be a model for calculating the observation values of the physical quantities by using the linear transform of the state variables and the Gaussian noise, and the update unit may update the state variables such that a square error of the state variables is minimized.

According to the aspect, the time evolution of the state variables is represented by the simulation model including the linear transform and the Gaussian noise, and the observation is represented by the observation model including the linear transform and the Gaussian noise, and thus a road surface profile can be estimated through computation causing a relatively low load.

According to still another aspect of the present invention, there is provided a road surface profile estimating system as defined in claim 8.

According to the aspect, the road surface profiles are estimated under the first condition and the second condition, and the plurality of parameters included in the simulation model are determined such that the difference between the road surface profiles estimated under both conditions is reduced. Therefore, the plurality of parameters included in the simulation model can be determined together with the estimation of the road surface profiles.

According to still another aspect of the present invention, there is provided a road surface profile estimating method as defined in claim 9.

According to the aspect, the road surface profiles are estimated under the first condition and the second condition, and the plurality of parameters included in the simulation model are determined such that the difference between the road surface profiles estimated under both conditions is reduced. Therefore, the plurality of parameters included in the simulation model can be determined together with the estimation of the road surface profiles.

According to still another aspect of the present invention, there is provided a road surface profile estimating program as defined in claim 10.

According to the aspect, the road surface profiles are estimated under the first condition and the second condition, and the plurality of parameters included in the simulation model are determined such that the difference between the road surface profiles estimated under both conditions is reduced. Therefore, the plurality of parameters included in the simulation model can be determined together with the estimation of the road surface profiles.

Advantageous Effects of Invention

According to the present invention, it is possible to provide a road surface profile estimating device, a road surface profile estimating system, a road surface profile estimating method, and a road surface profile estimating program capable of estimating a road surface profile and also determining a plurality of parameters included in a simulation model.

**Brief Description of Drawings**

Fig. 1 is a diagram illustrating a network configuration of a road surface profile estimating system according to a first embodiment of the present invention.

Fig. 2 is a functional block diagram of a road surface profile estimating device according to the first embodiment.

Fig. 3 is a diagram illustrating a physical configuration of the road surface profile estimating device according to the first embodiment.

Fig. 4 is a conceptual diagram of a simulation model used by the road surface profile estimating device according to the first embodiment.

Fig. 5 is a flowchart illustrating a parameter determination process executed by the road surface profile estimating device according to the first embodiment.

Fig. 6 is a flowchart illustrating a road surface profile estimation process executed by the road surface profile estimating device according to the first embodiment.

Fig. 7 is a diagram illustrating parameters determined by the road surface profile estimating device according to the first embodiment.

Fig. 8 is a diagram illustrating a power spectral density of a road surface profile estimated by the road surface profile estimating device according to the first embodiment.

Fig. 9 is a diagram illustrating a road surface profile estimated for a front tire and a road surface profile estimated for a rear tire by the road surface profile estimating device according to the first embodiment.

Fig. 10 is a diagram illustrating a power spectral density of the road surface profile estimated for the front tire and a power spectral density of the road surface profile estimated for the rear tire by the road surface profile estimating device according to the first embodiment.

Fig. 11 is a diagram illustrating a relationship between an IRI of a road surface estimated by the road surface profile estimating device according to the first embodiment and a distance.

Fig. 12 is a diagram illustrating a relationship between a velocity and a distance of a vehicle used for estimating the IRI of a road surface by the road surface profile estimating device according to the first embodiment.

Fig. 13 is a flowchart illustrating a parameter determination process executed by a road surface profile estimating device according to a second embodiment of the present invention.

Fig. 14 is a flowchart illustrating a parameter determination process executed by a road surface profile estimating device according to a third embodiment of the present invention.

**Description of Embodiments**

Embodiments of the present invention will be described with reference to the accompanying drawings. In each drawing, those having the same reference numerals have the same or similar configurations.

[First Embodiment]

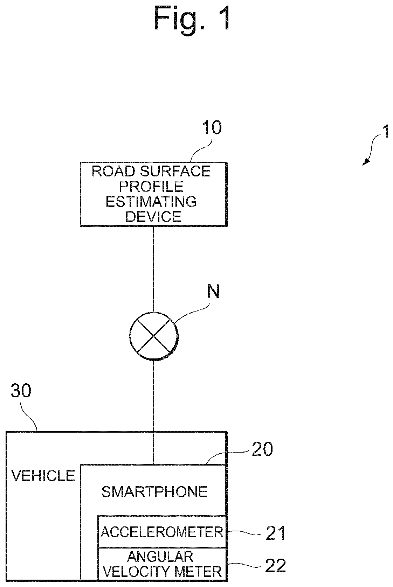

Fig. 1 is a diagram illustrating a network configuration of a road surface profile estimating system 1 according to a first embodiment of the present invention. The road surface profile estimating system 1 includes a vehicle 30, an accelerometer 21 that measures an acceleration in a direction vertical to a road surface on which the vehicle 30 contacts the ground, an angular velocity meter 22 that measures an angular velocity with respect to a pitch axis of the vehicle 30, and a road surface profile estimating device 10 that estimates a profile of a road surface on which the vehicle 30 is traveling. In the road surface profile estimating system 1 according to the present embodiment, the accelerometer 21 and the angular velocity meter 22 are built in a smartphone 20. The smartphone 20 may be provided at any place such as a dashboard or a trunk room of the vehicle 30. However, the accelerometer 21 and the angular velocity meter 22 may be separately provided in the vehicle 30. The accelerometer 21 measures the acceleration in the direction vertical to the road surface on which the vehicle 30 contacts the ground, but does not necessarily measure only the acceleration in the vertical direction, and may also measure an acceleration a direction horizontal to the road surface. The accelerometer 21 may measure at least a component in the direction vertical to the road surface among a plurality of components of the acceleration of the vehicle 30. The angular velocity meter 22 measures the angular velocity with respect to the pitch axis of the vehicle 30, but does not necessarily measure only the angular velocity with respect to the pitch axis, and may also measure an angular velocity with respect to a roll axis of the vehicle 30 and an angular velocity with respect to a yaw axis thereof. The angular velocity meter 22 may measure at least the angular velocity with respect to the pitch axis among the angular velocities with respect to the plurality of axes of the vehicle 30. The accelerometer 21 and the angular velocity meter 22 are examples of measurement units that measure physical quantities representing a motion of the vehicle 30.

The road surface profile estimating device 10 estimates a profile of the road surface on which the vehicle 30 is traveling on the basis of, for example, the acceleration and the angular velocity measured by the accelerometer 21 and the angular velocity meter 22. Here, the acceleration and the angular velocity measured by the accelerometer 21 and the angular velocity meter 22 are examples of physical quantities representing the motion of the vehicle 30 that is traveling on the road surface. In the road surface profile estimating system 1 according to the present embodiment, the road surface profile estimating device 10 is connected to the smartphone 20 via a communication network N. Here, the communication network N may be a wired or wireless communication network. The road surface profile estimating device 10 does not necessarily have to be a device independent of the smartphone 20, and may be configured integrally with the smartphone 20. In this case, the smartphone 20 may function as the road surface profile estimating device 10 by executing a road surface profile estimating program installed on the smartphone 20.

The vehicle 30 may be an automobile that travels on the road surface with four-wheel tires. However, the vehicle 30 may be a three-wheeled vehicle, a two-wheeled vehicle, or a five-wheeled or more vehicle. As the vehicle 30, an automobile of any size may be used, and, in the present specification, a case where a light vehicle (Light), a medium-sized vehicle (Medium), and a large vehicle (Heavy) are used as the vehicle 30 will be described.

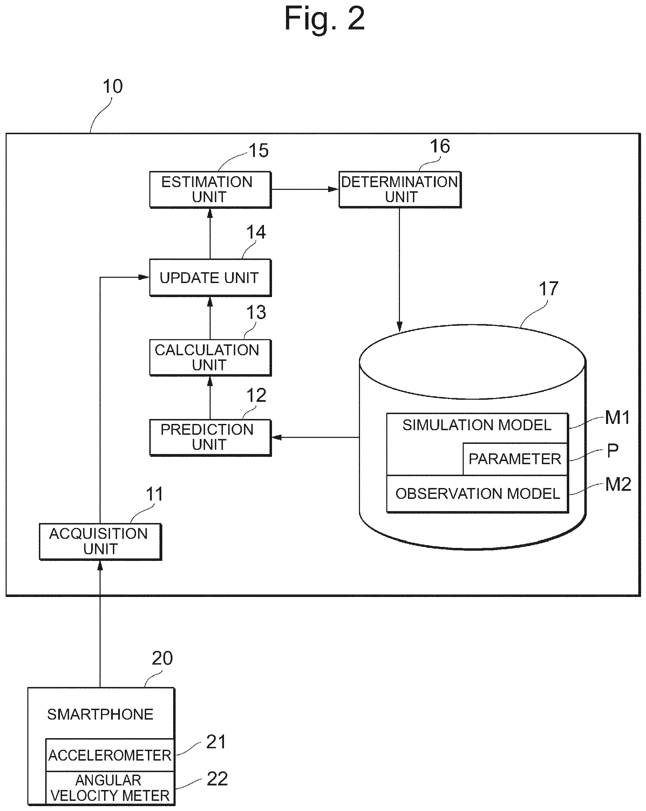

Fig. 2 is a functional block diagram of the road surface profile estimating device 10 according to the first embodiment of the present invention. The road surface profile estimating device 10 includes an acquisition unit 11, a prediction unit 12, a calculation unit 13, an update unit 14, an estimation unit 15, a determination unit 16, and a storage unit 17.

The acquisition unit 11 acquires physical quantities representing the motion of the vehicle 30 that is traveling on the road surface. In the present embodiment, the acquisition unit 11 acquires the acceleration in the direction vertical to the road surface on which the vehicle 30 contacts the ground and the angular velocity with respect to the pitch axis. The acquisition unit 11 may communicate with the smartphone 20 to acquire the acceleration from the accelerometer 21 built in the smartphone 20 and acquire the angular velocity from the angular velocity meter 22.

The prediction unit 12 predicts time evolution of state variables including variables representing an unevenness of the road surface on which the vehicle 30 is traveling and variables representing physical quantities on the basis of a simulation model M1 including a plurality of parameters P. Here, the simulation model M1 including the plurality of parameters P is stored in the storage unit 17. In the present embodiment, the simulation model M1 is a half car model for the vehicle 30, and the state variables are variables representing a state of the half car model. More specifically, variables representing the unevenness of the road surface include a vertical displacement and velocity of a front tire of the half car model and a vertical displacement and velocity of a rear tire of the half car model. Variables representing a vertical motion of the vehicle 30 include a vertical displacement and velocity of the center of gravity of the half car model, a vertical displacement and velocity of a front suspension of the half car model, and a vertical displacement and velocity of a rear suspension of the half car model. Variables representing a rotational motion with respect to the pitch axis of the vehicle 30 include a rotation angle and an angular velocity with respect to a pitch axis passing through the center of gravity of the half car model. The prediction unit 12 may calculate the vertical displacement by integrating the acceleration acquired by the acquisition unit 11 in the second order with respect to time, and may calculate an angular displacement with respect to the pitch axis by integrating the angular velocity acquired by the acquisition unit 11 in the first order with respect to the time.

The calculation unit 13 calculates observation values of the physical quantities from the state variables predicted by the prediction unit 12 on the basis of an observation model M2. Specifically, the calculation unit 13 calculates the acceleration in the direction vertical to the road surface on which the vehicle 30 contacts the ground, the angular velocity with respect to the pitch axis, the vertical displacement, and the angular displacement with respect to the pitch axis by using the state variables predicted by the prediction unit 12 on the basis of the observation model M2. The observation model M2 is stored in the storage unit 17.

The update unit 14 updates the state variables through data assimilation between the physical quantities acquired by the acquisition unit 11 and the physical quantities calculated by the calculation unit 13. Here, the data assimilation is a process of updating the state variables predicted by using the simulation model M1 on the basis of actually measured values and thus improving the prediction accuracy. In the present embodiment, the data assimilation is performed by using a Kalman filter. Specific examples of the data assimilation will be described later in detail.

The estimation unit 15 estimates profiles of the road surface under a first condition and a second condition, respectively, on the basis of the variables representing the unevenness of the road surface included in the state variables. Here, the profile of the road surface indicates a vertical shape of the road surface.

The road surface profile estimated by the estimation unit 15 under the first condition may be a road surface profile estimated on the basis of variables representing the vertical displacement and velocity of the front tire of the half car model. The road surface profile estimated by the estimation unit 15 under the second condition may be a road surface profile estimated on the basis of variables representing the vertical displacement and velocity of the rear tire of the half car model.

The determination unit 16 determines the plurality of parameters P such that an absolute value of an evaluation function for evaluating a difference between the road surface profile estimated under the first condition and the road surface profile estimated under the second condition is small. The road surface profile estimated under the first condition and the road surface profile estimated under the second condition are required to originally match each other. Thus, the road surface profiles are estimated under the first condition and the second condition, and the plurality of parameters P included in the simulation model M1 are determined such that the difference between the road surface profiles estimated under both conditions is reduced. Therefore, the plurality of parameters P included in the simulation model M1 can be determined together with the estimation of the road surface profiles.

The evaluation function may include a difference between a first function calculated from the variables representing the vertical displacement and velocity of the front tire and a second function calculated from the variables representing the vertical displacement and velocity of the rear tire. Consequently, a plurality of parameters P included in the simulation model M1 can be determined under the request that the road surface profile estimated on the basis of the variables representing the vertical displacement and velocity of the front tire and the road surface profile estimated on the basis of the variables representing the vertical displacement and velocity of the rear tire are required to match each other.

The storage unit 17 stores the simulation model M1 and the observation model M2. In the road surface profile estimating device 10 according to the present embodiment, the simulation model M1 is a model that represents time evolution of a state variable by using linear transform of the state variable and the Gaussian noise, and the observation model M2 is a model used to calculate an acceleration in the direction vertical to the road surface on which the vehicle 30 contacts the ground, an angular velocity with respect to the pitch axis of the vehicle 30, a vertical displacement, and an angular displacement with respect to the pitch axis by using the linear transform of the state variable and the Gaussian noise. The update unit 14 updates the state variable such that a square error of the state variable is minimized. As will be described later in detail, the prediction unit 12, the calculation unit 13, and the update unit 14 of the road surface profile estimating device 10 according to the present embodiment function as a Kalman filter.

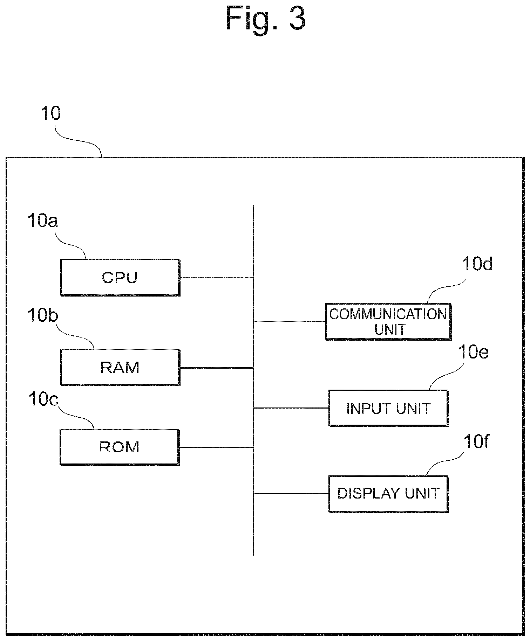

Fig. 3 is a diagram illustrating a physical configuration of the road surface profile estimating device 10 according to the first embodiment. The road surface profile estimating device 10 includes a central processing unit (CPU) 10a corresponding to a computation unit, a random access memory (RAM) 10b corresponding to a storage unit, a read only memory (ROM) 10c corresponding to a storage unit, a communication unit 10d, an input unit 10e, and a display unit 10f. The respective constituents are connected to each other via a bus such that data can be transmitted and received. In this example, a case where the road surface profile estimating device 10 includes a single computer will be described, but the road surface profile estimating device 10 may be realized by combining a plurality of computers. The configuration illustrated in Fig. 3 is an example, and the road surface profile estimating device 10 may have a constituent other than these constituents, or may not have some of these constituents.

The CPU 10a is a control unit that controls execution of a program stored in the RAM 10b or the ROM 10c, computes data, and processes data. The CPU 10a is a computation unit that executes a program (road surface profile estimating program) for estimating a profile of a road surface on the basis of physical quantities representing a motion of a vehicle that is traveling on the road surface. The CPU 10a receives various data from the input unit 10e or the communication unit 10d, and displays a computation result of the data on the display unit 10f, or stores the computation result into the RAM 10b or the ROM 10c.

The RAM 10b is a storage unit in which data can be rewritten, and may include, for example, a semiconductor storage element. The RAM 10b may store data such as the road surface profile estimating program executed by the CPU 10a, the simulation model M1, and the observation model M2. These are examples, and data other than the data may be stored in the RAM 10b, or some of the data may not be stored.

The ROM 10c is a storage unit in which data can be read, and may include, for example, a semiconductor storage element. The ROM 10c may store, for example, an image editing program or data that is not rewritten.

The communication unit 10d is an interface that connects the road surface profile estimating device 10 to other devices. The communication unit 10d may be connected to the communication network N such as the Internet.

The input unit 10e receives data that is input from a user, and may include, for example, a keyboard and a touch panel.

The display unit 10f visually displays a computation result from the CPU 10a, and may include, for example, a liquid crystal display (LCD). The display unit 10f may display a graph indicating an estimated road surface profile or a plurality of determined parameters P.

The road surface profile estimating program may be stored and provided in a computer-readable storage medium such as the RAM 10b or the ROM 10c, or may be provided via a communication network connected by the communication unit 10d. In the road surface profile estimating device 10, the CPU 10a executes the road surface profile estimating program, and thus the operations of the acquisition unit 11, the prediction unit 12, the calculation unit 13, the update unit 14, the estimation unit 15, and the determination unit 16 described with reference to Fig. 2 are realized. These physical constituents are examples and do not necessarily have to be separate constituents. For example, the road surface profile estimating device 10 may include a large-scale integration (LSI) into which the CPU 10a and the RAM 10b or the ROM 10c are integrated.

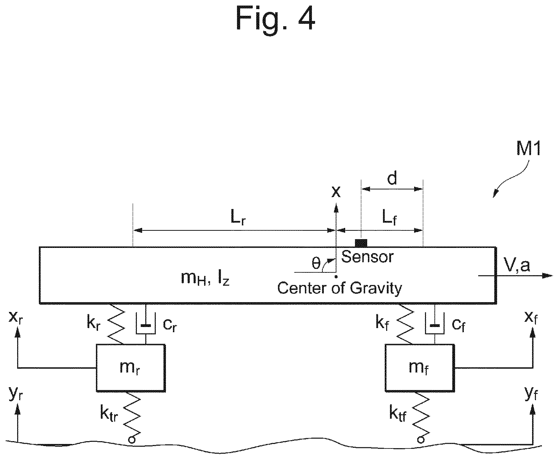

Fig. 4 is a conceptual diagram of the simulation model M1 used by the road surface profile estimating device 10 according to the first embodiment. The simulation model M1 is a half car model and includes twelve state variables and thirteen parameters. The simulation model M1 is a half car model for the vehicle 30 that is traveling on a road surface at a velocity V(t) and an acceleration a(t).

The state variables include a vertical displacement $y_f$ and velocity dyr/dt of a front tire of the half car model, a vertical displacement $y_r$ and velocity $dy_r/dt$ of a rear tire of the half car model, a vertical displacement x and velocity dx/dt of the center of gravity of the half car model, a vertical displacement xf and velocity dxf/dt of a front suspension of the half car model, a vertical displacement $x_r$ and velocity $dx_r/dt$ of a rear suspension of the half car model, and a rotation angle $\theta$ and an angular velocity $d\theta/dt$ with respect to the pitch axis passing through the center of gravity of the half car model.

The parameters include a spring coefficient ktf of the front tire of the half car model, the mass $m_f$ of the front tire, a spring coefficient $k_f$ and a damping coefficient cf of the front suspension, a spring coefficient $k_{tr}$ of the rear tire of the half car model, the mass $m_r$ of the rear tire, a spring coefficient $k_r$ and a damping coefficient $c_r$ of the rear suspension, the mass $m_H$ of the vehicle body and an inertial moment $I_z$ around the pitch axis of the half car model, a horizontal distance $L_f$ from the center of gravity of the half car model to the ground contact point of the front tire, a horizontal distance $L_r$ from the center of gravity of the half car model to the ground contact point of the rear tire, and a horizontal distance d from the ground contact point of the front tire to the provision point of the accelerometer 21 and the angular velocity meter 22.

The half car model is used as the simulation model M1, and thus a motion state of the vehicle 30 can be expressed more accurately and the time evolution of the state variables can be predicted more accurately than when a quarter car model is used.

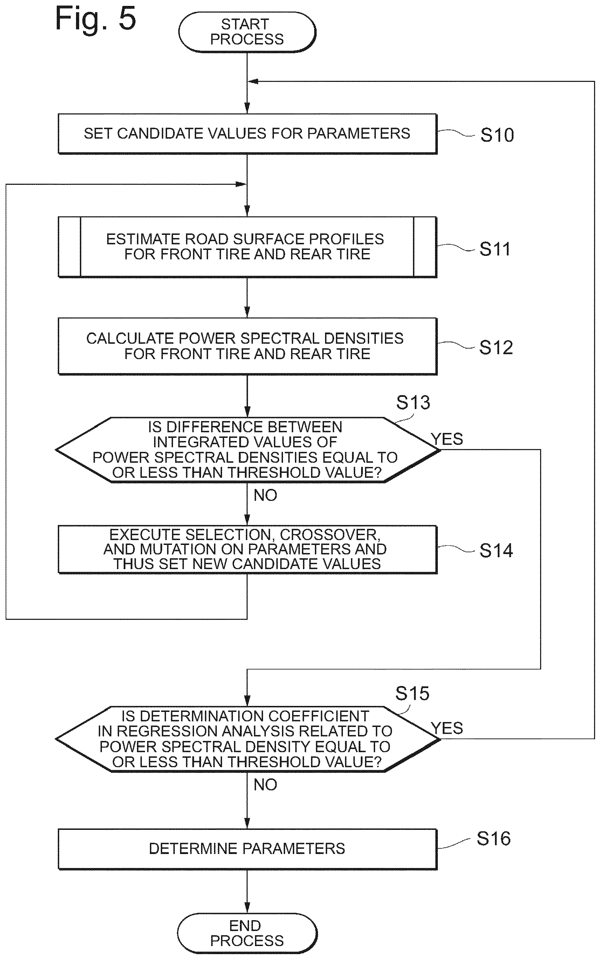

Fig. 5 is a flowchart illustrating a parameter determination process executed by the road surface profile estimating device 10 according to the first embodiment. First, the road surface profile estimating device 10 sets candidate values for a plurality of parameters P included in the simulation model M1 (S10).

The road surface profile estimating device 10 estimates road surface profiles for the front tire and the rear tire by using the set candidate values for the parameters P (S11). Details of a process of estimating the road surface profiles will be described with reference to the following drawing.

Thereafter, the road surface profile estimating device 10 calculates a power spectral density $P_{yf}(\omega)$ of the road surface profile related to the front tire and a power spectral density $P_{yr}(\omega)$ of the road surface profile related to the rear tire (S12). The road surface profile estimating device 10 determines whether a difference between integrated values of the power spectral densities related to the front tire and the rear tire is equal to or less than a threshold value (S13). That is, the road surface profile estimating device 10 determines whether a value of an evaluation function F expressed by the following Equation (1) is equal to or less than the threshold value.

[Equation 1]

$$F = \int_{\omega a}^{\omega b} (P_{yf}(\omega) - P_{yr}(\omega))d\omega$$

Here, $\omega$ represents a spatial frequency, and $\omega a$ and $\omega b$ represent spatial frequencies of the lower and upper limits of the integral. The threshold value may be freely set, and may be, for example, about $10^{-4}$.

As described above, the evaluation function F may include a difference between the first function calculated from the variables representing the vertical displacement and velocity of the front tire and the second function calculated from the variables representing the vertical displacement and velocity of the rear tire. In the case of this example, the first function is the power spectral density $P_{yf}(\omega)$ of the road surface profile calculated from the variables representing the vertical displacement and velocity of the front tire, and the second function is the power spectral density $P_{yr}(\omega)$ of the road surface profile calculated from the variables representing the vertical displacement and velocity of the rear tire. The power spectral densities are compared with each other, and thus it is possible to determine the plurality of parameters P included in the simulation model M1 without correcting the fact that the road surface profile calculated from the variables representing the vertical displacement and velocity of the front tire and the road surface profile calculated from the variables representing the vertical displacement and velocity of the rear tire are estimated to deviate by a wheelbase length ($L_f+L_r$).

In a case where the value of the evaluation function F is not equal to or smaller than the threshold value (S13: NO), the road surface profile estimating device 10 executes selection, crossover, and mutation processes on the plurality of parameters P, and thus sets new candidate values (S14). The new candidate values for the parameters are used to repeatedly perform estimation of road surface profiles (S11), calculation of power spectral densities (S12), and comparison between a value of the evaluation function F and the threshold value (S13). Here, the selection, crossover, and mutation processes may be processes used in an existing genetic algorithm. A plurality of parameters P are determined by using the genetic algorithm, and thus appropriate parameters P can be efficiently determined even in a case where the number of the plurality of parameters P increases and a complete search is difficult.

On the other hand, in a case where the value of the evaluation function F is equal to or smaller than the threshold value (S13: YES), the road surface profile estimating device 10 determines whether a determination coefficient in regression analysis related to a power spectral density is equal to or less than a threshold value (S15). The determination unit 16 of the road surface profile estimating device 10 may perform regression analysis in which a logarithm of a power spectral density calculated by using the candidate values for a plurality of parameters is used as a dependent variable and a logarithm of a frequency is used as an independent variable, and may determine whether or not to employ the candidate values on the basis of comparison between the determination coefficient in the regression analysis and the threshold value. Consequently, it is possible to determine a plurality of parameters more accurately by excluding a case where an absolute value of the evaluation function calculated by using the candidate values for the plurality of parameters is small but deviates from a true value.

In a case where the determination coefficient in the regression analysis related to the power spectral density is equal to or less than the threshold value (S15: YES), that is, in a case where the power spectral density relatively greatly deviates from a regression line, the road surface profile estimating device 10 sets new candidate values for parameters (S10), and repeatedly performs estimation of road surface profiles (S11), calculation of power spectral densities (S12), and comparison between a value of the evaluation function F and the threshold value (S13).

On the other hand, when the determination coefficient in the regression analysis related to the power spectral density is not equal to or less than the threshold value (S15: NO), that is, in a case where the power spectral density is relatively favorably approximated by the regression line, the road surface profile estimating device 10 determines the calculated parameters as a plurality of parameters P of the simulation model M1 (S16). Thus, the parameter determination process is finished.

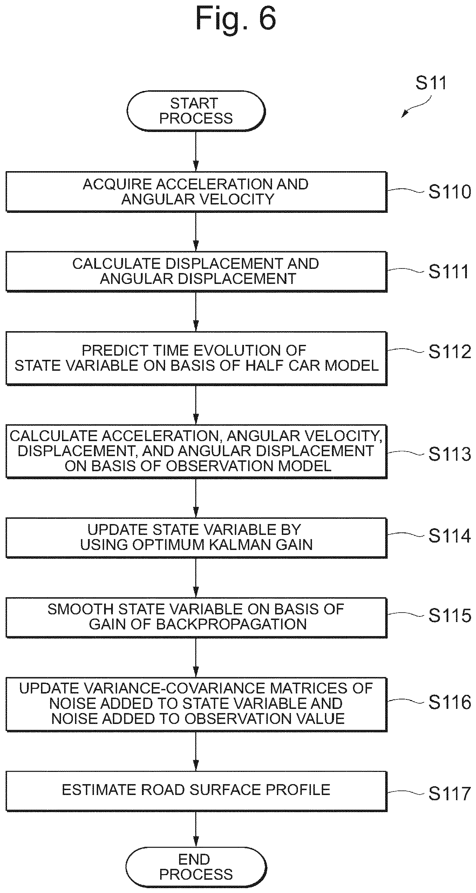

Fig. 6 is a flowchart illustrating a road surface profile estimation process executed by the road surface profile estimating device 10 according to the first embodiment. Fig. 6 illustrates details of the road surface profile estimation process (S11) illustrated in Fig. 5.

First, the road surface profile estimating device 10 acquires an acceleration in a direction vertical to a road surface on which the vehicle 30 contacts the ground and an angular velocity with respect to the pitch axis (S110). Measurement of the acceleration in the accelerometer 21 and measurement of the angular velocity in the angular velocity meter 22 may be performed at predetermined time intervals. The road surface profile estimating device 10 may acquire the acceleration and the angular velocity each time the measurement is performed by the accelerometer 21 and the angular velocity meter 22, or may collectively acquire the acceleration and the angular velocity after the measurement is completed.

The road surface profile estimating device 10 integrates the acceleration acquired by the acquisition unit 11 to calculate a vertical displacement, and integrates the angular velocity to calculate an angular displacement with respect to the pitch axis (S111). The acceleration and angular velocity acquired by the acquisition unit 11 and the calculated displacement and angular displacement are collectively represented by a vector x.

The road surface profile estimating device 10 predicts time evolution of state variables on the basis of the half car model (S112). The time evolution of the state variables is obtained on the basis of an equation of motion expressed by the following Equation (2).

[Equation 2]

$$M\ddot{x}(t) + C\dot{x}(t) + Kx(t) = Py(t)$$

Here, the vector x is expressed by the following Equation (3). The vector x includes, as vector components, a vertical displacement x of the center of gravity of the half car model, an angular displacement $\theta$ with respect to the pitch axis passing through the center of gravity, a vertical displacement xf of the front suspension of the half car model, and a vertical displacement $x_r$ of the rear suspension of the half car model.

[Equation 3]

$$x(t) = \begin{bmatrix} x & \theta & x_f & x_r \end{bmatrix}^{\mathrm{T}}$$

The matrices M, C, and K are given by the following Equations (4) to (6), respectively, and are quantities depending on parameters.

[Equation 4]

$$M = \begin{bmatrix} m_H & 0 & 0 & 0 \\ 0 & I_z & 0 & 0 \\ 0 & 0 & m_f & 0 \\ 0 & 0 & 0 & m_r \end{bmatrix}$$

[Equation 5]

$$C = \begin{bmatrix} c_f + c_r & L_r c_r - L_f c_f & -c_f & -c_r \\ L_r c_r - L_f c_f & L_f^2 c_f + L_r^2 c_r & L_f c_f & -L_r c_r \\ -c_f & L_f c_f & c_f & 0 \\ -c_r & -L_r c_r & 0 & c_r \end{bmatrix}$$

[Equation 6]

$$K = \begin{bmatrix} k_f + k_r & L_r k_r - L_f k_f & -k_f & -k_r \\ L_r k_r - L_f k_f & L_f^2 k_f + L_r^2 k_r & L_f k_f & -L_r k_r \\ -k_f & L_f k_f & k_f + k_{tf} & 0 \\ -k_r & -L_r k_r & 0 & k_r + k_{tr} \end{bmatrix}$$

The right side of the Equation (2) is given by a vector y representing the unevenness of the road surface and a matrix P depending on parameters. The matrix P is given by the following Equation (7), and the vector y is given by the following Equation (8).

[Equation 7]

$$P = \begin{bmatrix} 0 & 0 & k_{tf} & 0 \\ 0 & 0 & 0 & k_{tr} \end{bmatrix}^T$$

[Equation 8]

$$y(t) = \begin{bmatrix} y_f & y_r \end{bmatrix}^T$$

In the following description, as expressed in Equation (9), twelve state variables are represented by a vector $X^a$.

[Equation 9]

$$X^a(t) = \begin{bmatrix} x(t)^T & \dot{x}(t)^T & y_f & \dot{y}_f & y_r & \dot{y}_r \end{bmatrix}^T$$

The road surface profile estimating device 10 represents, with a noise term, an error that may occur by modeling a behavior of the vehicle 30 by using the half car model. The road surface profile estimating device 10 obtains the time evolution of the state variable $X^a$ according to the following Equation (10).

[Equation 10]

$$X^a{}_{k+1} = A_a X^a{}_k + \zeta_k$$

Here, the subscripts "k" and "k+1" of the state variable $X^a$ represent time steps. The matrix $A_a$ on the right side represents the time evolution of the state variable expressed by Equation (2) as linear transform in a unit time step. When $A_a$ is represented by $\exp(A_{ca}\Delta t)$, $A_{ca}$ is expressed by the following Equation (11). However, $\Delta t$ represents a unit time step.

[Equation 11]

$$A_{ca} = \begin{bmatrix} A_c & B_c \\ 0_{2\times8} & 0_{2\times2} \end{bmatrix}$$

Here, $A_c$ is expressed by the following Equation (12), and $B_c$ is expressed by the following Equation (13). $O_{m\times n}$ is an m×n matrix of which all elements are 0.

[Equation 12]

$$A_c = \begin{bmatrix} 0_{4\times4} & I_{4\times4} \\ -M^{-1}K & -M^{-1}C \end{bmatrix}$$

[Equation 13]

$$B_c = \begin{bmatrix} 0_{4\times2} \\ M^{-1}P \end{bmatrix}$$

Here, the matrices M, C, K, and P are as expressed in Equations (4) to (7). $I_{4\times4}$ is a unit matrix of 4×4, and the matrices $O_{4\times4}$, $O_{4\times2}$, and $O_{2\times2}$ are zero matrices of 4×4, 4×2, and 2×2, respectively.

$\zeta_k$ on the right side of Equation (10) is a noise term at the time step k. The noise term $\zeta_k$ includes an eight-dimensional vector $w_k$ and a four-dimensional vector $\eta_k$ as expressed by the following Equation (14).

[Equation 14]

$$\zeta_k = \begin{bmatrix} w_k \\ \eta_k \end{bmatrix}$$

In the noise term $\zeta_k$, the noise term $w_k$ for the vertical displacement x and velocity dx/dt of the center of gravity of the half car model, the vertical displacement xf and velocity dxf/dt of the front suspension of the half car model, the vertical displacement $x_r$ and velocity $dx_r$/dt of the rear suspension of the half car model, and the rotation angle θ and the angular velocity dθ/dt with respect to the pitch axis passing through the center of gravity of the half car model is the Gaussian noise having an average of 0 and a variance-covariance matrix of Q. The variance-covariance matrix of the noise term $w_k$ is expressed by the following Equation (15). Here, $\delta_{k,l}$ is a Kronecker delta.

[Equation 15]

$$E[w_k w_l^T] = Q\delta_{k,l}$$

In the noise term $\zeta_k$, the noise term $\eta_k$ for the vertical displacement $y_f$ and velocity dyr/dt of the front tire of the half car model and the vertical displacement $y_r$ and velocity $dy_r$/dt of the rear tire of the half car model is the Gaussian noise having an average of 0 and a variance-covariance matrix of S. The variance-covariance matrix of the noise term $\eta_k$ is expressed by the following Equation (16).

[Equation 16]

$$E[\boldsymbol{\eta}_k \boldsymbol{\eta}_l^T] = \boldsymbol{S} \delta_{k,l}$$

The road surface profile estimating device 10 calculates an acceleration, an angular velocity, a displacement, and an angular displacement from the state variables predicted by the prediction unit 12 on the basis of the observation model M2 (S113). The road surface profile estimating device 10 calculates a vector u that summarizes the acceleration, the angular velocity, the displacement, and the angular displacement from the state variable $X^a$ predicted by the prediction unit 12 on the basis of the observation model M2 expressed by the following Equation (17). The road surface profile estimating device 10 models the observation through linear transform $C_a$ of the state variables, and models an observation error by using a noise term $v_k$.

[Equation 17]

$$\boldsymbol{u}_k = \boldsymbol{C}_a \boldsymbol{X}^a{}_k + \boldsymbol{v}_k$$

Here, the linear transform $C_a$ is given by the following Equation (18).

[Equation 18]

$$\boldsymbol{C}_a = \begin{bmatrix} \boldsymbol{C}_1 \\ \boldsymbol{0}_{2 \times 2} \end{bmatrix}^T$$

The matrix C1 is given by the following Equation (19).

[Equation 19]

$$C_1 = \begin{bmatrix} -\dfrac{k_f + k_r}{m_H} + \dfrac{(L_f-d)(L_r k_r - L_f k_f)}{I_z} & 0 & 1 & 0 \\[2mm] -\dfrac{L_r k_r - L_f k_f}{m_H} + \dfrac{(L_f-d)(L_f^2 k_f - L_r^2 k_r)}{I_z} & 0 & d-L_f & 1 \\[2mm] \dfrac{k_f}{m_H} + \dfrac{(L_f-d)L_f k_f}{I_z} & 0 & 0 & 0 \\[2mm] \dfrac{k_r}{m_H} - \dfrac{(L_f-d)L_r k_r}{I_z} & 0 & 0 & 0 \\[2mm] -\dfrac{c_f + c_r}{m_H} + \dfrac{(L_f-d)(L_r c_r - L_f c_f)}{I_z} & 0 & 0 & 0 \\[2mm] -\dfrac{L_r c_r - L_f c_f}{m_H} + \dfrac{(L_f-d)(L_f^2 c_f - L_r^2 c_r)}{I_z} & 1 & 0 & 0 \\[2mm] \dfrac{c_f}{m_H} + \dfrac{(L_f-d)L_f c_f}{I_z} & 0 & 0 & 0 \\[2mm] \dfrac{c_r}{m_H} - \dfrac{(L_f-d)L_r c_r}{I_z} & 0 & 0 & 0 \end{bmatrix}$$

The noise term $v_k$ on the right side of Equation (17) is the Gaussian noise having an average of 0 and a variance-covariance matrix of R. The variance-covariance matrix of the noise term $v_k$ is expressed by the following Equation (20).

[Equation 20]

$$E\left[v_k v_l^T\right] = R\delta_{k,l}$$

The road surface profile estimating device 10 updates the state variable by using an optimum Kalman gain (S114). Here, the optimum Kalman gain is an update coefficient determined to minimize a square error of the state variable, and is given by the following Equation (21).

[Equation 21]

$$G_{k+1} = P_{k+1}^- C_a^T \left[C_a P_{k+1}^- C_a^T + R_{k+1}\right]^{-1}$$

$P_{k+1}^-$ on the right side of Equation (21) is a variance of the state variable before update at the time step k+1. Regarding the state variables, an initial value of an expected value is given by the following Equation (22), and an initial value of the variance is given by the following Equation (23). The state variable $X^a$ with the hat symbol represents an estimated value.

[Equation 22]

$$\widehat{X^a}_0 = E[X^a{}_0]$$

[Equation 23]

$$P_0 = E[(X^a{}_0 - E[X^a{}_0])(X^a{}_0 - E[X^a{}_0])^T]$$

As described above, the time evolution of the expected value of the state variable $X^a$ is given by the following Equation (24).

[Equation 24]

$$\widehat{X^a}^-_{k+1} = A_a\widehat{X^a}_k$$

Here, the superscript "-" indicates an amount before the update. The time evolution of the variance of the state variable $X^a$ is given by the following Equation (25).

[Equation 25]

$$P^-_{k+1} = A_a P_k A_a^T + Q_k$$

The update unit 14 obtains an expected value of the updated state variable $X^a$ according to the following Equation (26).

[Equation 26]

$$\widehat{X^a}_{k+1} = \widehat{X^a}^-_{k+1} + G_{k+1}(u_{k+1} - C_a \widehat{X^a}^-_{k+1})$$

Here, $u_{k+1}$ on the right side is a value observed at the time step k+1. The second term on the right side is a term for correcting the state variable by using a value obtained by multiplying an observation residual by the optimum Kalman gain Gk+1.
The road surface profile estimating device 10 obtains a variance of the updated state variable $X^a$ by using the following Equation (27).

[Equation 27]

$$P_{k+1} = (I - G_{k+1}C_a)P^-_{k+1}$$

As described above, state variables can be estimated with high accuracy by predicting the state variables for each time step and updating the state variables according to a measurement residual. In the present embodiment, the simulation model M1 is a model that represents the time evolution of the state variables by using the linear transform of the state variable and the Gaussian noise, and the observation model M2 is a model used to calculate observation values of physical quantities by using the linear transform of the state variable and the Gaussian noise. The update unit 14 of the road surface profile estimating device 10 according to the present embodiment may update the state variables such that a square error of the state variables is minimized. That is, the road surface profile estimating device 10 may update the state variables by using the optimum Kalman gain. As described above, the time evolution of the state variables is represented by the simulation model M1 including the linear transform and the Gaussian noise, and the observation is represented by the observation model M2 including the linear transform and the Gaussian noise, and thus a road surface profile can be estimated through computation causing a relatively low load.

The road surface profile estimating device 10 smooths state variables on the basis of a gain of backpropagation (S115). In the road surface profile estimating device 10 according to the present embodiment, the state variables are smoothed by using an RTS smoothing method. Specifically, when the time step exists from k=0 to k=T, the road surface profile estimating device 10 may use all subsequent state variables $x_{k+1}$, $x_{k+2}$, ..., and $x_T$ in order to smooth a state variable $x_k$ at the time step k. However, an interval L (where L is any natural number) may be designated, and the state variables may be smoothed by using $x_{k+1}$, $x_{k+2}$, ..., and $x_{k+L}$.

The road surface profile estimating device 10 initializes an expected value of the smoothed state variable by using the following Equation (28), and initializes a variance of the smoothed state variable by using the following Equation (29). Here, the superscript "RTS" of the state variable $X^a$ indicates that a value is RTS smoothed.

[Equation 28]

$$\widehat{X^{RTS}}_N = \widehat{X^a}_N$$

[Equation 29]

$$P_N^b = P_N$$

Next, the road surface profile estimating device 10 calculates a gain $\Phi$ of the backpropagation in the smoothing process by using the following Equation (30).

[Equation 30]

$$\Phi_k = P_k A_a [P_{k+1}^-]^{-1}$$

The road surface profile estimating device 10 smooths the expected value of the state variable from the time step k=T toward the past by using the following Equation (31) on the basis of the gain $\Phi$. The road surface profile estimating device 10 smooths the variance of the state variables by using the following Equation (32).

[Equation 31]

$$\widehat{X^{RTS}}_k = \widehat{X^a}_k + \Phi_k \left( \widehat{X^{RTS}}_{k+1} - \widehat{X^a}_{k+1}^- \right)$$

[Equation 32]

$$P_k^b = P_k - \Phi_k \left( P_{k+1}^- - P_{k+1}^b \right) \Phi_k^T$$

As described above, the state variables are smoothed. As described above, not only the vertical acceleration and the angular velocity with respect to the pitch axis but also the vertical displacement and the angular displacement with respect to the pitch axis are used for data smoothing, and thus a road surface profile can be estimated more accurately.

Thereafter, the update unit 14 of the road surface profile estimating device 10 updates the variance-covariance matrix Q of noise added to the state variables in the simulation model M1 and the variance-covariance matrix R of noise added to the observation values of the physical quantities in the observation model M2 on the basis of a difference between the physical quantities acquired by the acquisition unit 11 and the physical quantities calculated by the calculation unit 13 (S116). In the road surface profile estimating device 10 according to the present embodiment, the variance-covariance matrix of noise is updated by using the Robbins-Monro algorithm.

Specifically, the road surface profile estimating device 10 updates the variance-covariance matrix Q of noise added to the state variables in the simulation model M1 by using the following Equation (33). The road surface profile estimating device 10 updates the variance-covariance matrix R of noise added to the observation values of the physical quantities in the observation model M2 by using the following Equation (34). In the present embodiment, the off-diagonal terms of Q and R are assumed to be 0, and the updates of Equations (34) and (35) are applied to the diagonal terms of Q and R.

[Equation 33]

$$\mathbf{Q}_k = \left(1 - \alpha_{Q,k}\right)Q_{k-1} + \alpha_{Q,k}G_k(u_k - u_k^-)(u_k - u_k^-)^T G_k^T$$

[Equation 34]

$$\mathbf{R}_k = \left(1 - \alpha_{R,k}\right)R_{k-1} + \alpha_{R,k}(u_k - u_k^-)(u_k - u_k^-)^T$$

Here, $u_k^-$ is a quantity expressed by the following Equation (35). $\alpha_{Q,k}$ and $\alpha_{R,k}$ are hyperparameters represented by positive real numbers smaller than 1, and may be, for example, about 1/7.

[Equation 35]

$$u_k^- = C_a \widehat{X^a}_{\,k}$$

As described above, the variance-covariance matrix Q of noise added to the state variables in the simulation model M1 and the variance-covariance matrix R of noise added to the observation values of the physical quantities in the observation model M2 are dynamically updated. Therefore, a road surface profile can be stably estimated by removing dependence on initial values of the variance-covariance matrices.

Finally, the estimation unit 15 of the road surface profile estimating device 10 estimates a road surface profile on the basis of the variables representing the unevenness of the road surface and included in the state variables (S117). Specifically, the road surface profile estimating device 10 estimates a road surface profile on the basis of the vertical displacement $y_f$ of the front tire of the half car model and the vertical displacement $y_r$ of the rear tire of the half car model. Thus, the road surface profile estimation process is finished.

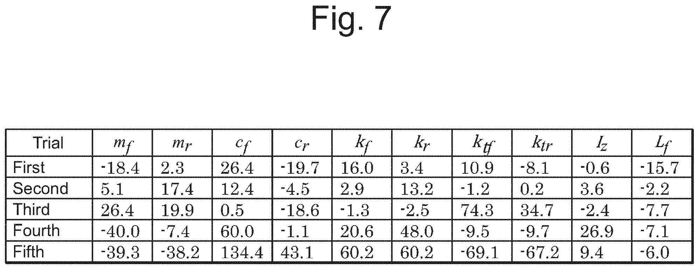

Fig. 7 is a diagram illustrating parameters determined by the road surface profile estimating device 10 according to the first embodiment. In the present embodiment, the mass $m_f$ of the front tire, the mass $m_r$ of the rear tire, the damping coefficient cf of the front suspension, the damping coefficient $c_r$ of the rear suspension, the spring coefficient $k_f$ of the front suspension, the spring coefficient $k_r$ of the rear suspension, the spring coefficient ktf of the front tire, the spring coefficient $k_{tr}$ of the rear tire of the half car model, the inertial moment $I_z$ around the pitch axis of the vehicle body, and the horizontal distance $L_f$ from the center of gravity of the half car model to the ground contact point of the front tire are determined. Among the parameters, the parameters other than the horizontal distance $L_f$ from the center of gravity to the ground contact point of the front tire are expressed as a ratio to the total mass of the vehicle $m_{tot}=m_H+m_f+m_r$.

The table illustrated in Fig. 7 indicates errors between the plurality of determined parameters and the true values in a case where the genetic algorithm for determining a plurality of parameters is executed a plurality of times. For example, focusing on the mass $m_f$ of the front tire, in a case of the first trial, the error is -18.4%, the error at the second trial is 5.1%, the error at the third trial is 26.4%, the error at the fourth trial is -40.0%, and the error at the fifth trial is -39.3%. As described above, it is a characteristic of the genetic algorithm that the values of the determined parameters differ depending on trial timings. In any trial case, a value of the evaluation function F is equal to or smaller than the threshold value.

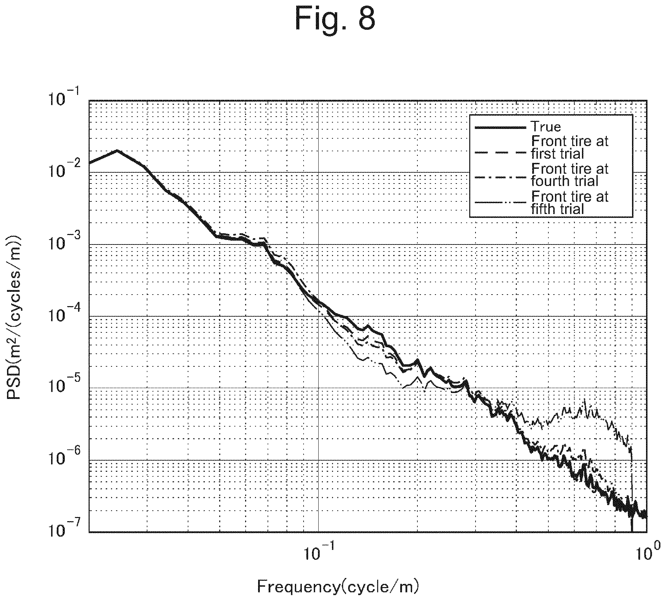

Fig. 8 is a diagram illustrating a power spectral density of the road surface profile estimated by the road surface profile estimating device 10 according to the first embodiment. In Fig. 8, the vertical axis expresses a power spectral density (PSD) of the road surface profile estimated in the unit of m2/(cycle/m), and the horizontal axis expresses a frequency (Frequency) in the unit of cycle/m. The vertical axis and the horizontal axis are logarithmic axes.

In Fig. 8, a spectral density calculated from a true road surface profile is indicated by a solid line, a spectral density calculated by using the parameters at the first trial illustrated in Fig. 7 is indicated by a dashed line, a spectral density calculated by using the parameters at the fourth trial illustrated in Fig. 7 is indicated by a dot chain line, and a spectral density calculated by using the parameters at the fifth trial illustrated in Fig. 7 is indicated by a two-dot chain line.

According to Fig. 8, the spectral densities calculated by using the parameters at the first and fourth trials are almost consistent with the spectral density calculated from the true road surface profile in the entire frequency domain. On the other hand, the spectral density calculated by using the parameters at the fifth trial is different from the spectral density calculated from the true road surface profile, especially in the high frequency domain.

The determination unit 16 of the road surface profile estimating device 10 according to the present embodiment may perform regression analysis in which a logarithm of a power spectral density calculated by using the candidate values for a plurality of parameters is used as a dependent variable and a logarithm of a frequency is used as an independent variable, and may determine whether or not to employ the candidate values on the basis of comparison between the determination coefficient in the regression analysis and the threshold value. For example, the spectral density calculated by using the parameters at the fifth trial deviates from the straight line on the double-logarithmic graph, and the determination coefficient in the regression analysis is equal to or less than the threshold value. Thus, the determination unit 16 may not employ the parameters at the fifth trial. As described above, a plurality of parameters can be determined more accurately.

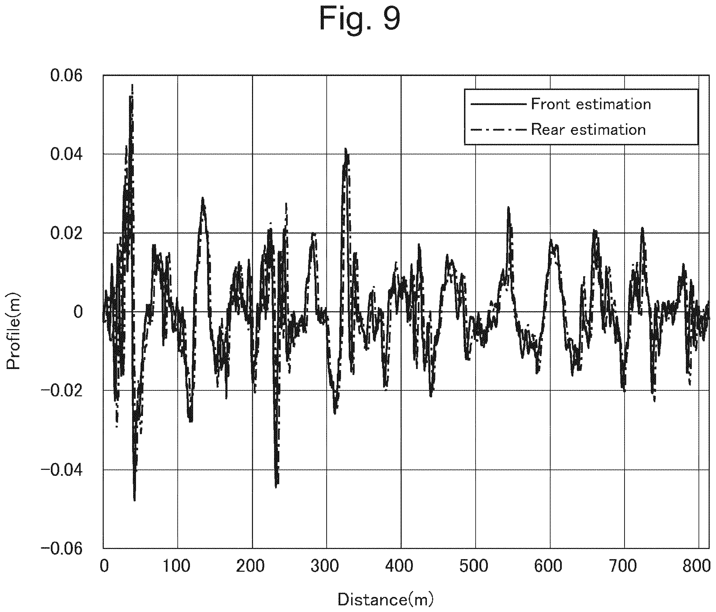

Fig. 9 is a diagram illustrating a road surface profile estimated for the front tire and a road surface profile estimated for the rear tire by the road surface profile estimating device 10 according to the first embodiment. In Fig. 9, the vertical axis expresses a road surface profile in the unit of meter (m), and the horizontal axis expresses a traveling distance (Distance) in the unit of meter (m). In Fig. 9, a medium-sized vehicle (Medium) is used as the vehicle 30, a road surface profile estimated for the front tire by the road surface profile estimating system 1 according to the present embodiment is indicated by a solid line, and a road surface profile estimated for the rear tire is indicated by a dot chain line.

The road surface profile estimating device 10 according to the present embodiment determines a plurality of parameters P of the simulation model M1 such that the integration of the power spectral density of the road surface profile related to the front tire matches the integration of the power spectral density of the road surface profile related to the rear tire. According to Fig. 9, it can be confirmed that the road surface profiles estimated by using the parameters P determined in the above-described way substantially match each other for the front tire and the rear tire.

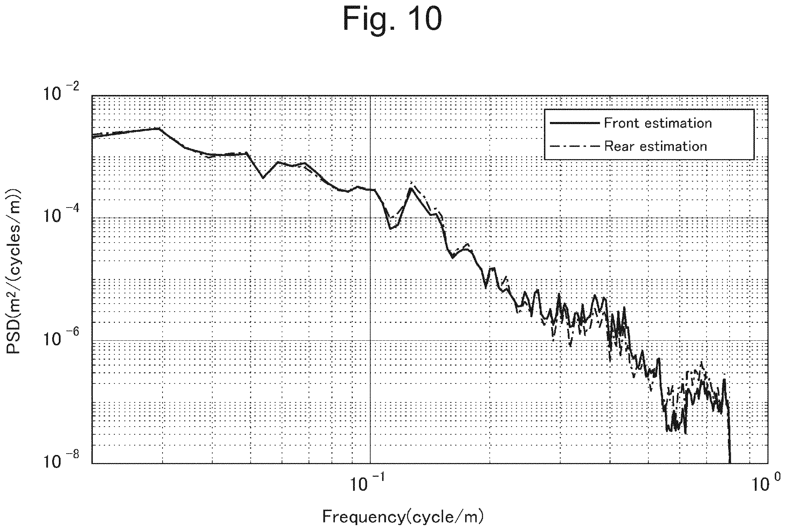

Fig. 10 is a diagram illustrating a power spectral density of a road surface profile estimated for the front tire and a power spectral density of a road surface profile estimated for the rear tire by the road surface profile estimating device 10 according to the first embodiment. In Fig. 10, the vertical axis expresses a power spectral density (PSD) of the road surface profile estimated in the unit of $m^2$/(cycle/m), and the horizontal axis expresses a frequency (Frequency) in the unit of cycle/m. The vertical axis and the horizontal axis are logarithmic axes.

The road surface profile estimating device 10 according to the present embodiment determines a plurality of parameters P of the simulation model M1 such that the integration of the power spectral density of the road surface profile related to the front tire matches the integration of the power spectral density of the road surface profile related to the rear tire. According to Fig. 10, it can be confirmed that the power spectral densities of the road surface profiles calculated by using the parameters P determined in the above-described way substantially match each other for the front tire and the rear tire.

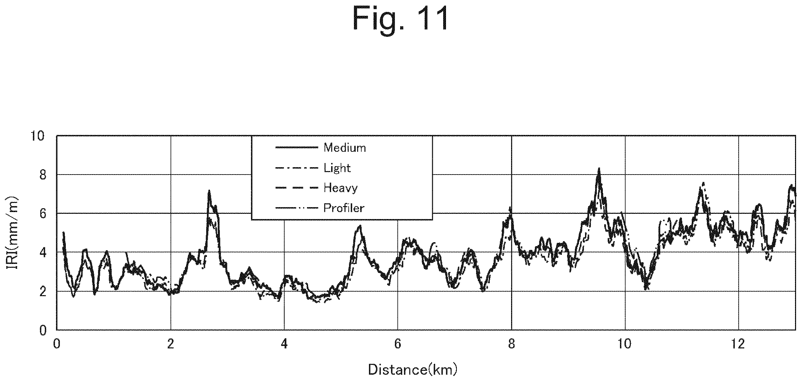

Fig. 11 is a diagram illustrating a relationship between an IRI of the road surface estimated by the road surface profile estimating device 10 according to the first embodiment and a distance. In Fig. 11, the vertical axis expresses a road surface profile in the unit of meter (m), and the horizontal axis expresses a traveling distance (Distance) in the unit of meter (m). In Fig. 11, an IRI calculated by the road surface profile estimating system 1 according to the present embodiment by using a medium-sized vehicle (Medium) is indicated by a solid line, an IRI calculated by the road surface profile estimating system 1 according to the present embodiment by using a light vehicle (Light) is indicated by a dot chain line, an IRI calculated by the road surface profile estimating system 1 according to the present embodiment by using a large vehicle (Heavy) is indicated by a dashed line, and an IRI measured by using a dedicated vehicle (Profiler) is indicated by a two-dot chain line.

According to Fig. 11, regardless of whether the light vehicle, the medium-sized vehicle, or the large vehicle is used as the vehicle 30, it can be confirmed that the substantially same result as the IRI measured by using the dedicated vehicle is obtained by the road surface profile estimating system 1 according to the present embodiment. As described above, the road surface profile estimating device 10 requests that the power spectral densities of the estimated road surface profiles match each other for the front tire and the rear tire even in a case where a plurality of parameters for modeling the vehicle 30 are unknown, and can thus appropriately determine a plurality of parameters and estimate a road surface profile with high accuracy.

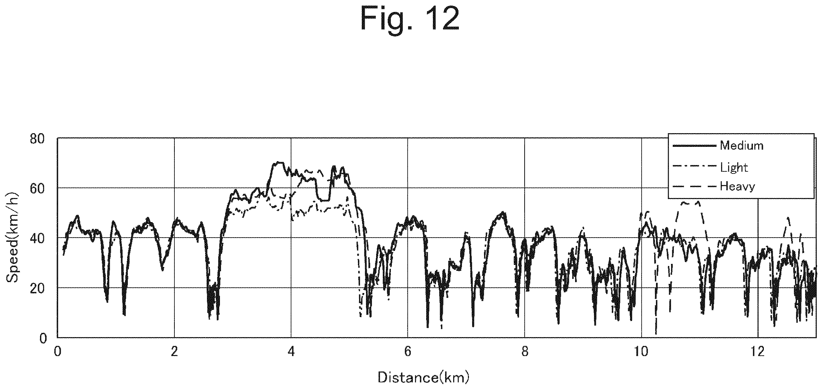

Fig. 12 is a diagram illustrating a relationship between a velocity and a distance of a vehicle used for estimating an IRI of the road surface by the road surface profile estimating device 10 according to the first embodiment. In Fig. 12, the vertical axis expresses a velocity of the vehicle 30 in the unit of kilometer per hour (km/h), and the horizontal axis expresses a traveling distance (Distance) in the unit of kilometer (km). In Fig. 12, a velocity of a medium-sized vehicle (Medium) is indicated by a solid line, a velocity of a light vehicle (Light) is indicated by a dot chain line, and a velocity of a large vehicle (Heavy) is indicated by a dashed line. It can be seen from Fig. 12 that velocities of the medium-sized vehicle, the light vehicle, and the large vehicle are not constant, and temporal changes of the velocities are also different from each other. As described above, even if the velocities of the vehicles 30 used for measuring the acceleration and the angular velocity are different, the road surface profile estimating system 1 according to the present embodiment can appropriately determine a plurality of parameters P included in the simulation model M1 and can stably estimate a road surface profile. The road surface profile estimating system 1 according to the present embodiment can estimate a road surface profile with high accuracy regardless of a size or a traveling velocity of the vehicle 30 provided with the smartphone 20 having the accelerometer 21 and the angular velocity meter 22 built therein.

[Second Embodiment]

The road surface profile estimating device 10 according to the present embodiment has the same functions as those of the road surface profile estimating device 10 according to the first embodiment except that a different process is performed by the determination unit 16. The determination unit 16 of the road surface profile estimating device 10 according to the present embodiment determines a plurality of parameters P such that an absolute value of an evaluation function including a difference between a first function calculated from variables representing a vertical displacement and velocity of the front tire and a second function calculated from variables representing a vertical displacement and velocity of the rear tire is small. Here, the first function is a value $y_f(y)$ of variables representing the vertical displacement of the front tire at a predetermined time point t, and the second function is a value $y_r(t+L/v(t))$ of variables representing the vertical displacement of the rear tire at a time point $(t+L/v(t))$ obtained by adding, to the predetermined time point, a value that is obtained by dividing a distance L $(=L_f+L_r)$ from the front tire to the rear tire by a velocity $v(t)$ of the vehicle 30 at the predetermined time point t. Here, the velocity $v(t)$ of the vehicle 30 may be a value measured by a speedometer provided in the vehicle 30 or a value measured on the basis of GPS position information. The evaluation function F may be expressed by the following Equation (36), for example.

[Equation 36]

$$F = \int_{ta}^{tb} (y_f(t) - y_r(t + L/v(t)))dt$$

Here, t represents time, and ta and tb represent the lower and upper limit times of integration. The road surface profile estimating device 10 determines whether or not to employ candidate values for a plurality of parameters depending on whether or not a value of the evaluation function F is equal to or smaller than a threshold value. The threshold value may be freely set, and may be, for example, about $10^{-4}$.
As described above, it is corrected that the variable representing the vertical displacement of the front tire and the variable representing the vertical displacement of the rear tire are estimated to deviate by a wheelbase length, and thus a plurality of parameters P included in the simulation model M1 can be determined.

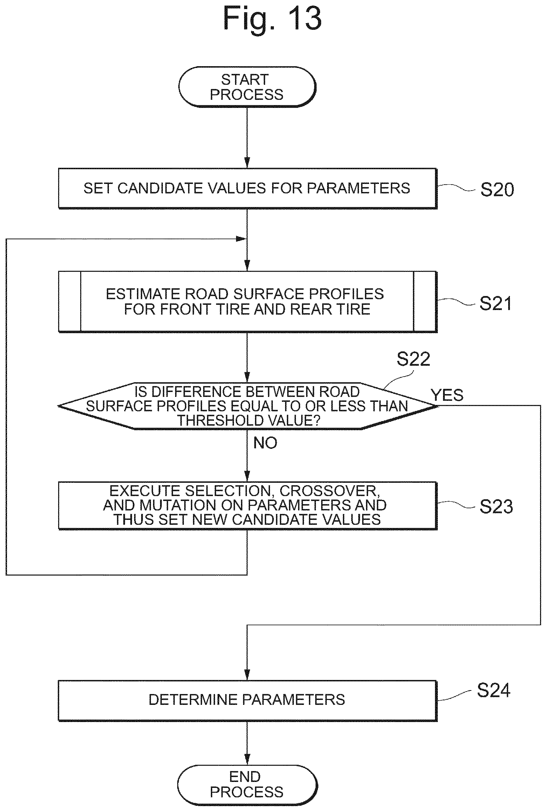

Fig. 13 is a flowchart illustrating a parameter determination process executed by the road surface profile estimating device 10 according to the second embodiment of the present invention. First, the road surface profile estimating device 10 sets candidate values for a plurality of parameters P included in the simulation model M1 (S20).
The road surface profile estimating device 10 estimates road surface profiles for the front tire and the rear tire by using the set candidate values for the parameters P (S21). Details of the process of estimating the road surface profiles are the same as those in Fig. 6.
Thereafter, the road surface profile estimating device 10 calculates the value $y_f(y)$ of the variable representing the vertical displacement of the front tire and the value $y_r(t+L/v(t))$ of the variable representing the vertical displacement of the rear tire, obtained by correcting a delay of the wheelbase length, and determines whether or not a difference between the road surface profiles is equal to or less than a threshold value (S22). That is, the road surface profile estimating device 10 determines whether a value of the evaluation function F expressed by Equation (36) is equal to or smaller than the threshold value.
In a case where the value of the evaluation function F is not equal to or smaller than the threshold value (S22: NO), the road surface profile estimating device 10 executes selection, crossover, and mutation processes on the plurality of parameters P, and thus sets new candidate values (S23). The new candidate values for the parameters are used to repeatedly perform estimation of road surface profiles (S21) and comparison between a value of the evaluation function F and the threshold value (S22). Here, the selection, crossover, and mutation processes may be processes used in an existing genetic algorithm. A plurality of parameters P are determined by using the genetic algorithm, and thus appropriate parameters P can be efficiently determined even in a case where the number of the plurality of parameters P increases and a complete search is difficult.
On the other hand, in a case where the value of the evaluation function F is equal to or smaller than the threshold value (S22: YES), the road surface profile estimating device 10 determines the calculated parameters as a plurality of parameters P of the simulation model M1 (S24). Thus, the parameter determination process is finished.

[Further Example]

The road surface profile estimating device 10 according to a further example not according to the claimed invention has the same functions as those of the road surface profile estimating device 10 according to the first embodiment except that a different process is performed by the determination unit 16. The determination unit 16 of the road surface profile estimating device 10 according to the present example determines a plurality of parameters P such that an absolute value of an evaluation function for evaluating a difference between a road surface profile estimated under a first condition and a road surface profile estimated under a second condition is small. Here, the road surface profile estimated under the first condition is a road surface profile estimated by the estimation unit 15 in a case where the vehicle 30 has traveled on a predetermined road at a first velocity $v_1$, and the road surface profile estimated under the second condition is a road surface profile estimated by the estimation unit 15 in a case where the vehicle 30 has traveled on the predetermined road at a second velocity $v_2$ different from the first velocity $v_1$. Here, the first velocity $v_1$ and the second velocity $v_2$ may be time-dependent values, respectively. The first velocity $v_1$ and the second velocity $v_2$ may be values measured by a speedometer provided in the vehicle 30, or may be values measured on the basis of GPS position information. The road surface profile estimating device 10 according to the present example can determine a plurality of parameters P included in the simulation model M1 under the request that the road surface profile estimated in a case where the vehicle has traveled on a predetermined road at the first velocity $v_1$ and the road surface profile estimated in a case where the vehicle has traveled on the predetermined road at the second velocity $v_2$ are required to match each other.

The evaluation function F may be used to evaluate a difference between an international roughness index $IRI_{v1}$ of the road surface profile estimated under the first condition and an international roughness index $IRI_{v2}$ of the road surface profile estimated under the second condition. The evaluation function F may be expressed by the following Equation (37), for example.

[Equation 37]

$$F = \int_{xa}^{xb} (IRI_{v1}(x) - IRI_{v2}(x))dx$$

Here, x represents a distance, and xa and xb represent the lower and upper limit times of integration. The road surface profile estimating device 10 determines whether or not to employ candidate values for a plurality of parameters depending on whether or not a value of the evaluation function F is equal to or smaller than a threshold value. The threshold value may be freely set, and may be, for example, about $10^{-4}$.

As described above, the international roughness indexes are calculated on the basis of the road surface profiles estimated under the first condition and the second condition, and the plurality of parameters P included in the simulation model M1 are determined such that a difference between the international roughness indexes estimated under both conditions is reduced. Therefore, it is possible to determine the plurality of parameters P included in the simulation model M1 together with the estimation of the road surface profiles.

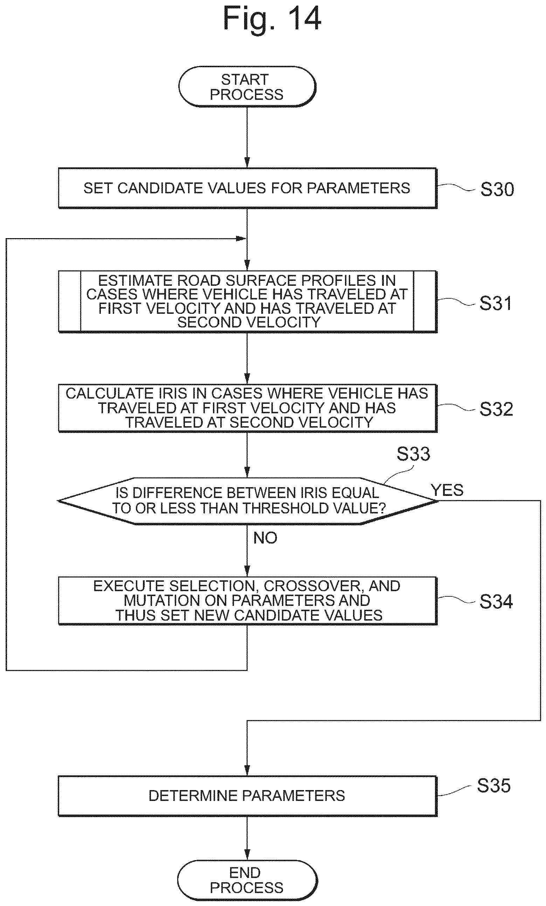

Fig. 14 is a flowchart illustrating a parameter determination process executed by the road surface profile estimating device 10 according to the present example. First, the road surface profile estimating device 10 sets candidate values for a plurality of parameters P included in the simulation model M1 (S30).

The road surface profile estimating device 10 estimates road surface profiles in a case where the vehicle has traveled at a first velocity and a case where the vehicle has traveled at a second velocity by using the set candidate values for the parameters P (S31). Details of the process of estimating the road surface profiles are the same as those in Fig. 6.

Thereafter, the road surface profile estimating device 10 calculates $IRI_{v1}$ in a case where the vehicle has traveled at the first velocity and $IRI_{v2}$ in a case where the vehicle has traveled at the second velocity (S32). The road surface profile estimating device 10 determines whether a difference between the IRIs is equal to or less than a threshold value (S33). That is, the road surface profile estimating device 10 determines whether a value of the evaluation function F expressed by Equation (37) is equal to or smaller than the threshold value.

In a case where the value of the evaluation function F is not equal to or smaller than the threshold value (S33: NO), the road surface profile estimating device 10 executes selection, crossover, and mutation processes on the plurality of parameters P, and thus sets new candidate values (S33). The new candidate values for the parameters are used to repeatedly perform estimation of road surface profiles (S31), calculation of IRIs (S32), and comparison between a value of the evaluation function F and the threshold value (S33). Here, the selection, crossover, and mutation processes may be processes used in an existing genetic algorithm. A plurality of parameters P are determined by using the genetic algorithm, and thus appropriate parameters P can be efficiently determined even in a case where the number of the plurality of parameters P increases and a complete search is difficult.

On the other hand, when the value of the evaluation function F is equal to or smaller than the threshold value (S33: YES), the road surface profile estimating device 10 determines the calculated parameters as a plurality of parameters P of the simulation model M1 (S35). Thus, the parameter determination process is finished.

The embodiments described above are for facilitating the understanding of the present invention, and are not for limiting the interpretation of the present invention according to the appended claims.

Reference Signs List

        1 road surface profile estimating system
        10 road surface profile estimating device
        10a CPU
        10b RAM
        10c ROM
        10d communication unit
        10e input unit
        10f display unit
        11 acquisition unit
        12 prediction unit
        13 calculation unit
        14 update unit
        15 estimation unit
        16 determination unit
        17 storage unit
        20 smartphone
        21 accelerometer
        22 angular velocity meter
        M1 simulation model
        M2 observation model
        N communication network
        P parameter

**Claims**

1. A road surface profile estimating device (10) comprising:

        an acquisition unit (11) configured to acquire (S110) physical quantities representing a motion of a vehicle that is traveling on a road surface;
        a prediction unit (12) configured to predict (S112), on the basis of a simulation mode (M1) including a plurality of parameters (P), a time evolution of state variables including variables representing an unevenness of the road surface on which the vehicle is traveling and variables representing the physical quantities, wherein simulation model is a half car model for the vehicle;
        a calculation unit (13) configured to calculate (S113) observation values of the physical quantities from the state variables predicted by the prediction unit on the basis of an observation model (M2);
        an update unit (14) configured to update (S114) the state variables through data assimilation between the physical quantities acquired by the acquisition unit and the physical quantities calculated by the calculation unit;
        an estimation unit (15) configured to estimate (S117) respective profiles of the road surface under a first condition and a second condition on the basis of variables representing the unevenness of the road surface, included in the state variables;
        wherein
        the profile of the road surface estimated under the first condition is a profile of the road surface estimated on the basis of variables representing a vertical displacement and velocity of a front tire of the half car model, and the profile of the road surface estimated under the second condition is a profile of the road surface estimated on the basis of variables representing a vertical displacement and velocity of a rear tire of the half car model;
        **characterized by**

a determination unit configured to determine the plurality of parameters such that an absolute value of an evaluation function for evaluating a difference between the profile of the road surface estimated under the first condition and the profile of the road surface estimated under the second condition is equal to or smaller than a threshold value, wherein

the evaluation function includes a difference between a first function calculated from the variables representing the vertical displacement and velocity of the front tire and a second function calculated from the variables representing the vertical displacement and velocity of the rear tire.

2.  The road surface profile estimating device according to claim 1, wherein
the update unit updates a variance-covariance matrix of noise added to the state variables in the simulation model and a variance-covariance matrix of noise added to the observation values of the physical quantities in the observation model on the basis of a difference between the physical quantities acquired by the acquisition unit and the physical quantities calculated by the calculation unit.

3.  The road surface profile estimating device according to claim 1, wherein

the first function is a power spectral density of the profile of the road surface calculated from the variables representing the vertical displacement and velocity of the front tire, and
the second function is a power spectral density of the profile of the road surface calculated from the variables representing the vertical displacement and velocity of the rear tire.

4.  The road surface profile estimating device according to claim 3, wherein
the determination unit performs regression analysis in which a logarithm of the power spectral density calculated by using candidate values for the plurality of parameters is used as a dependent variable and a logarithm of a frequency is used as an independent variable, and determines whether or not to employ the candidate values on the basis of comparison between a determination coefficient in the regression analysis and a threshold value.

5.  The road surface profile estimating device according to claim 1, wherein

the first function is a value of variables representing a vertical displacement of the front tire at a predetermined time point, and
the second function is a value of variables representing a vertical displacement of the rear tire at a time point obtained by adding, to the predetermined time point, a value that is obtained by dividing a distance from the front tire to the rear tire by a velocity of the vehicle at the predetermined time point.

6.  The road surface profile estimating device according to any one of claims 1 to 5, wherein
the determination unit determines the plurality of parameters by using a genetic algorithm.

7.  The road surface profile estimating device according to any one of claims 1 to 6, wherein

the simulation model is a model representing the time evolution of the state variables by using linear transform of the state variables and Gaussian noise,
the observation model is a model for calculating the observation values of the physical quantities by using the linear transform of the state variables and the Gaussian noise, and
the update unit updates the state variables such that a square error of the state variables is minimized.

8.  A road surface profile estimating system comprising:

a vehicle (30) configured to travel on a road surface;
a measurement unit configured to measure physical quantities representing a motion of the vehicle; and
the road surface profile estimating device according to any of the preceding claims.

9.  A road surface profile estimating method comprising: acquiring (S110) physical quantities representing a motion of a vehicle that is traveling on a road surface;

predicting (S112), on the basis of a simulation model (M1) including a plurality of parameters (P), a time evolution of state variables including variables representing an unevenness of the road surface on which the vehicle is traveling and variables representing the physical quantities, wherein the simulation model is a half car model for the vehicle;

calculating (S113) observation values of the physical quantities from the predicted state variables on the basis of an observation model (M2);

updating (S114) the state variables through data assimilation between the acquired physical quantities and the calculated physical quantities;

estimating (S117) respective profiles of the road surface under a first condition and a second condition on the basis of the variables representing the unevenness of the road surface, included in the state variables;

wherein

the profile of the road surface estimated under the first condition is a profile of the road surface estimated on the basis of variables representing a vertical displacement and velocity of a front tire of the half car model, and the profile of the road surface estimated under the second condition is a profile of the road surface estimated on the basis of variables representing a vertical displacement and velocity of a rear tire of the half car model;

**characterized by**

determining the plurality of parameters such that an absolute value of an evaluation function for evaluating a difference between the profile of the road surface estimated under the first condition and the profile of the road surface estimated under the second condition is equal to or smaller than a threshold value, wherein

the evaluation function includes a difference between a first function calculated from the variables representing the vertical displacement and velocity of the front tire and a second function calculated from the variables representing the vertical displacement and velocity of the rear tire.

10. A road surface profile estimating program causing a computation unit provided in a road surface profile estimating device to function as:

an acquisition unit (11) configured to acquire (S110) physical quantities representing a motion of a vehicle that is traveling on a road surface;

a prediction unit (12) configured to predict (S112), on the basis of a simulation mode (M1) including a plurality of parameters (P), a time evolution of state variables including variables representing an unevenness of the road surface on which the vehicle is traveling and variables representing the physical quantities, wherein the simulation model is a half car model for the vehicle;

a calculation unit (13) configured to calculate (S113) observation values of the physical quantities from the state variables predicted by the prediction unit on the basis of an observation model (M2);

an update unit (14) configured to update (S114) the state variables through data assimilation between the physical quantities acquired by the acquisition unit and the physical quantities calculated by the calculation unit;

an estimation unit (15) configured to estimate (S117) respective profiles of the road surface under a first condition and a second condition on the basis of the variables representing the unevenness of the road surface, included in the state variables; and

wherein

the profile of the road surface estimated under the first condition is a profile of the road surface estimated on the basis of variables representing a vertical displacement and velocity of a front tire of the half car model, and the profile of the road surface estimated under the second condition is a profile of the road surface estimated on the basis of variables representing a vertical displacement and velocity of a rear tire of the half car model;

**characterized in that** the road surface profile estimating program further causes the computation unit to function as:

a determination unit configured to determine the plurality of parameters such that an absolute value of an evaluation function for evaluating a difference between the profile of the road surface estimated under the first condition and the profile of the road surface estimated under the second condition is equal to or smaller than a threshold value, wherein

the evaluation function includes a difference between a first function calculated from the variables representing the vertical displacement and velocity of the front tire and a second function calculated from the variables representing the vertical displacement and velocity of the rear tire.

## Patentansprüche

1. Vorrichtung (10) zur Schätzung des Straßenoberflächenprofils, umfassend:

eine Erfassungseinheit (11), die dafür ausgelegt ist, physikalische Größen zu erfassen (S110), die eine Bewegung eines Fahrzeugs darstellen, das auf einer Straßenoberfläche fährt;

eine Vorhersageeinheit (12), die dafür ausgelegt ist, auf der Grundlage eines Simulationsmodells (M1), das eine Vielzahl von Parametern (P) beinhaltet, eine zeitliche Entwicklung von Zustandsvariablen vorherzusagen (S112), die Folgendes beinhalten: Variablen, die eine Unebenheit der Straßenoberfläche darstellen, auf der das Fahrzeug fährt, und Variablen, die die physikalischen Größen darstellen, wobei das Simulationsmodell ein Halbwagenmodell für das Fahrzeug ist;

eine Berechnungseinheit (13), die dafür ausgelegt ist, aus den Zustandsvariablen, die von der Vorhersageeinheit auf der Grundlage eines Beobachtungsmodells (M2) vorhergesagt wurden, Beobachtungswerte der physikalischen Größen zu berechnen (S113);

eine Aktualisierungseinheit (14), die dafür ausgelegt ist, die Zustandsvariablen durch Datenassimilation zwischen den durch die Erfassungseinheit erfassten physikalischen Größen und durch die Berechnungseinheit berechneten physikalischen Größen zu aktualisieren (S114);

eine Schätzeinheit (15), die dafür ausgelegt ist, jeweilige Profile der Straßenoberfläche unter einer ersten Bedingung und einer zweiten Bedingung auf der Grundlage von die Unebenheit der Straßenoberfläche darstellenden Variablen zu schätzen (S117), die in den Zustandsvariablen enthalten sind; wobei

das unter der ersten Bedingung geschätzte Profil der Straßenoberfläche ein Profil der Straßenoberfläche ist, das auf der Grundlage von Variablen geschätzt wurde, die eine vertikale Verschiebung und eine Geschwindigkeit eines Vorderreifens des Halbwagenmodells darstellen, und

das unter der zweiten Bedingung geschätzte Profil der Straßenoberfläche ein Profil der Straßenoberfläche ist, das auf der Grundlage von Variablen geschätzt wurde, die eine vertikale Verschiebung und eine Geschwindigkeit eines Hinterreifens des Halbwagenmodells darstellen;

**gekennzeichnet durch** eine Bestimmungseinheit, die dafür ausgelegt ist, die Vielzahl von Parametern zu bestimmen, sodass ein Absolutwert einer Bewertungsfunktion zur Bewertung einer Differenz zwischen dem unter der ersten Bedingung geschätzten Profil der Straßenoberfläche und dem unter der zweiten Bedingung geschätzten Profil der Straßenoberfläche gleich oder kleiner als ein Schwellenwert ist, wobei

die Bewertungsfunktion eine Differenz zwischen einer ersten Funktion, die aus den Variablen berechnet wird, die die vertikale Verschiebung und die Geschwindigkeit des Vorderreifens darstellen, und einer zweiten Funktion, die aus den Variablen berechnet wird, die die vertikale Verschiebung und die Geschwindigkeit des Hinterreifens darstellen, beinhaltet.

2. Vorrichtung zur Schätzung des Straßenoberflächenprofils nach Anspruch 1, wobei
die Aktualisierungseinheit eine Varianz-Kovarianz-Matrix des Rauschens, die zu den Zustandsvariablen im Simulationsmodell hinzugefügt wird, und eine Varianz-Kovarianz-Matrix des Rauschens, die zu den Beobachtungswerten der physikalischen Größen im Beobachtungsmodell hinzugefügt wird, auf der Grundlage einer Differenz zwischen den durch die Erfassungseinheit erfassten physikalischen Größen und den durch die Berechnungseinheit berechneten physikalischen Größen aktualisiert.

3. Vorrichtung zur Schätzung des Straßenoberflächenprofils nach Anspruch 1, wobei

die erste Funktion eine spektrale Leistungsdichte des Profils der Straßenoberfläche ist, die aus den Variablen berechnet wird, die die vertikale Verschiebung und die Geschwindigkeit des Vorderreifens darstellen, und
die zweite Funktion eine spektrale Leistungsdichte des Profils der Straßenoberfläche ist, die aus den Variablen berechnet wird, die die vertikale Verschiebung und die Geschwindigkeit des Hinterreifens darstellen.

4. Vorrichtung zur Schätzung des Straßenoberflächenprofils nach Anspruch 3, wobei
die Bestimmungseinheit eine Regressionsanalyse durchführt, bei der ein Logarithmus der spektralen Leistungsdichte, der unter Verwendung von Kandidatenwerten für die Vielzahl von Parametern berechnet wurde, als abhängige Variable verwendet wird, und ein Logarithmus einer Frequenz als unabhängige Variable verwendet wird, und auf der Grundlage eines Vergleichs zwischen einem Bestimmungskoeffizient in der Regressionsanalyse und einem Schwellenwert bestimmt, ob die Kandidatenwerte verwendet werden sollen oder nicht.

5. Vorrichtung zur Schätzung des Straßenoberflächenprofils nach Anspruch 1, wobei

die erste Funktion ein Variablenwert ist, der eine vertikale Verschiebung des Vorderreifens zu einem vorbestimmten Zeitpunkt darstellt, und
die zweite Funktion ein Variablenwert ist, der eine vertikale Verschiebung des Hinterreifens zu einem Zeitpunkt darstellt, der erhalten wird, indem zu dem vorbestimmten Zeitpunkt ein Wert addiert wird, der erhalten wird, indem ein Abstand vom Vorderreifen zum Hinterreifen durch eine Geschwindigkeit des Fahrzeugs zu dem vorbestimmten Zeitpunkt dividiert wird.

6. Vorrichtung zur Schätzung des Straßenoberflächenprofils nach einem der Ansprüche 1 bis 5, wobei die Bestimmungseinheit die Vielzahl von Parametern unter Verwendung eines genetischen Algorithmus bestimmt.

7. Vorrichtung zur Schätzung des Straßenoberflächenprofils nach einem der Ansprüche 1 bis 6, wobei

der Simulationsmodus ein Modell ist, das die zeitliche Entwicklung der Zustandsvariablen unter Verwendung einer linearen Transformation der Zustandsvariablen und des Gaußschen Rauschens darstellt,
das Beobachtungsmodell ein Modell zur Berechnung der Beobachtungswerte der physikalischen Größen unter Verwendung der linearen Transformation der Zustandsvariablen und des Gaußschen Rauschens ist, und
die Aktualisierungseinheit die Zustandsvariablen aktualisiert, sodass ein quadratischer Fehler der Zustandsvariablen minimiert wird.

8. System zur Schätzung des Straßenoberflächenprofils, umfassend:

ein Fahrzeug (30), das dafür ausgelegt ist, auf einer Straßenoberfläche zu fahren;
eine Messeinheit, die dafür ausgelegt ist, physikalische Größen zu messen, die eine Bewegung des Fahrzeugs darstellen; und
die Vorrichtung zur Schätzung des Straßenoberflächenprofils nach einem der vorhergehenden Ansprüche.

9. Verfahren zur Schätzung des Straßenoberflächenprofils, umfassend:

Erfassen (S110) von physikalischen Größen, die eine Bewegung eines Fahrzeugs darstellen, das auf einer Straßenoberfläche fährt;
Vorhersagen (S112), auf der Grundlage eines Simulationsmodells (M1), das eine Vielzahl von Parametern (P) beinhaltet, einer zeitlichen Entwicklung von Zustandsvariablen, die Variablen, die eine Unebenheit der Straßenoberfläche, auf der das Fahrzeug fährt, und Variablen, die die physikalischen Größen darstellen, beinhalten, wobei das Simulationsmodell ein Halbwagenmodell für das Fahrzeug ist;
Berechnen (S113) von Beobachtungswerten der physikalischen Größen aus den vorhergesagten Zustandsvariablen auf der Grundlage eines Beobachtungsmodells (M2);
Aktualisieren (S114) der Zustandsvariablen durch Datenassimilation zwischen den erfassten physikalischen Größen und den berechneten physikalischen Größen;
Schätzen (S117) von jeweiligen Profilen der Straßenoberfläche unter einer ersten Bedingung und einer zweiten Bedingung auf der Grundlage der die Unebenheit der Straßenoberfläche darstellenden Variablen, die in den Zustandsvariablen enthalten sind;
wobei
das unter der ersten Bedingung geschätzte Profil der Straßenoberfläche ein Profil der Straßenoberfläche ist, das auf der Grundlage von Variablen geschätzt wurde, die eine vertikale Verschiebung und eine Geschwindigkeit eines Vorderreifens des Halbwagenmodells darstellen, und
das unter der zweiten Bedingung geschätzte Profil der Straßenoberfläche ein Profil der Straßenoberfläche ist, das auf der Grundlage von Variablen geschätzt wurde, die eine vertikale Verschiebung und eine Geschwindigkeit eines Hinterreifens des Halbwagenmodells darstellen;
**gekennzeichnet durch**
das Bestimmen der Vielzahl von Parametern, sodass ein Absolutwert einer Bewertungsfunktion zur Bewertung einer Differenz zwischen dem unter der ersten Bedingung geschätzten Profil der Straßenoberfläche und dem unter der zweiten Bedingung geschätzten Profil der Straßenoberfläche gleich oder kleiner als ein Schwellenwert ist, wobei
die Bewertungsfunktion eine Differenz zwischen einer ersten Funktion, die aus den Variablen berechnet wird, die die vertikale Verschiebung und die Geschwindigkeit des Vorderreifens darstellen, und einer zweiten Funktion, die aus den Variablen berechnet wird, die die vertikale Verschiebung und die Geschwindigkeit des Hinterreifens darstellen, beinhaltet.

10. Programm zur Schätzung des Straßenoberflächenprofils, das eine Recheneinheit, die in einer Vorrichtung zur Schätzung des Straßenoberflächenprofils vorgesehen ist, veranlasst, wie folgt zu funktionieren:

als Erfassungseinheit (11), die dafür ausgelegt ist, physikalische Größen zu erfassen (S110), die eine Bewegung eines Fahrzeugs darstellen, das auf einer Straßenoberfläche fährt;

als Vorhersageeinheit (12), die dafür ausgelegt ist, auf der Grundlage eines Simulationsmodells (M1), das eine Vielzahl von Parametern (P) beinhaltet, eine zeitliche Entwicklung von Zustandsvariablen vorherzusagen (S112), die Folgendes beinhalten: Variablen, die eine Unebenheit der Straßenoberfläche darstellen, auf der das Fahrzeug fährt, und Variablen, die die physikalischen Größen darstellen, wobei das Simulationsmodell ein Halbwagenmodell für das Fahrzeug ist;

als Berechnungseinheit (13), die dafür ausgelegt ist, aus den Zustandsvariablen, die von der Vorhersageeinheit auf der Grundlage eines Beobachtungsmodells (M2) vorhergesagt wurden, Beobachtungswerte der physikalischen Größen zu berechnen (S113);

als Aktualisierungseinheit (14), die dafür ausgelegt ist, die Zustandsvariablen durch Datenassimilation zwischen den durch die Erfassungseinheit erfassten physikalischen Größen und den durch die Berechnungseinheit berechneten physikalischen Größen zu aktualisieren (S114);

als Schätzeinheit (15), die dafür ausgelegt ist, jeweilige Profile der Straßenoberfläche unter einer ersten Bedingung und einer zweiten Bedingung auf der Grundlage der die Unebenheit der Straßenoberfläche darstellenden Variablen zu schätzen (S117), die in den Zustandsvariablen enthalten sind; und

wobei

das unter der ersten Bedingung geschätzte Profil der Straßenoberfläche ein Profil der Straßenoberfläche ist, das auf der Grundlage von Variablen geschätzt wurde, die eine vertikale Verschiebung und eine Geschwindigkeit eines Vorderreifens des Halbwagenmodells darstellen, und

das unter der zweiten Bedingung geschätzte Profil der Straßenoberfläche ein Profil der Straßenoberfläche ist, das auf der Grundlage von Variablen geschätzt wurde, die eine vertikale Verschiebung und eine Geschwindigkeit eines Hinterreifens des Halbwagenmodells darstellen;

**dadurch gekennzeichnet, dass** das Programm zur Schätzung des Straßenoberflächenprofils darüber hinaus die Recheneinheit veranlasst, wie folgt zu funktionieren:

als Bestimmungseinheit, die dafür ausgelegt ist, die Vielzahl von Parametern zu bestimmen, sodass ein Absolutwert einer Bewertungsfunktion zur Bewertung einer Differenz zwischen dem unter der ersten Bedingung geschätzten Profil der Straßenoberfläche und dem unter der zweiten Bedingung geschätzten Profil der Straßenoberfläche gleich oder kleiner als ein Schwellenwert ist, wobei

die Bewertungsfunktion eine Differenz zwischen einer ersten Funktion, die aus den Variablen berechnet wird, die die vertikale Verschiebung und die Geschwindigkeit des Vorderreifens darstellen, und einer zweiten Funktion, die aus den Variablen berechnet wird, die die vertikale Verschiebung und die Geschwindigkeit des Hinterreifens darstellen, beinhaltet.

## Revendications

1. Dispositif (10) d'estimation de profil de surface routière comprenant :

une unité d'acquisition (11) configurée pour acquérir (S110) des grandeurs physiques représentant un mouvement d'un véhicule qui circule sur une surface routière ;

une unité de prédiction (12) configurée pour prédire (S112), sur la base d'un mode de simulation (M1) incluant une pluralité de paramètres(P), une évolution temporelle de variables d'état incluant des variables représentant une inégalité de la surface routière sur laquelle le véhicule circule et des variables représentant les grandeurs physiques, dans lequel le modèle de simulation est un modèle de demi-voiture pour le véhicule ;

une unité de calcul (13) configurée pour calculer (S113) des valeurs d'observation des grandeurs physiques à partir des variables d'état prédites par l'unité de prédiction sur la base d'un modèle d'observation (M2) ;

une unité de mise à jour (14) configurée pour mettre à jour (S114) les variables d'état par assimilation de données entre les grandeurs physiques acquises par l'unité d'acquisition et les grandeurs physiques calculées par l'unité de calcul ;

une unité d'estimation (15) configurée pour estimer (S117) des profils respectifs de la surface routière dans une première condition et une seconde condition sur la base de variables représentant l'inégalité de la surface routière, incluses dans les variables d'état ;

dans lequel

le profil de la surface routière estimé dans la première condition est un profil de la surface routière estimé sur la base de variables représentant un déplacement vertical et une vitesse d'un pneu avant du modèle de demi-voiture,

et

le profil de la surface routière estimé dans la seconde condition est un profil de la surface routière estimé sur la base de variables représentant un déplacement vertical et une vitesse d'un pneu arrière du modèle de demi-voiture ;

**caractérisé par**

une unité de détermination configurée pour déterminer la pluralité de paramètres de telle sorte qu'une valeur absolue d'une fonction d'évaluation pour évaluer une différence entre le profil de la surface routière estimé dans la première condition et le profil de la surface routière estimé dans la seconde condition est égale ou inférieure à une valeur seuil, dans lequel

la fonction d'évaluation inclut une différence entre une première fonction calculée à partir des variables représentant le déplacement vertical et la vitesse du pneu avant et une seconde fonction calculée à partir des variables représentant le déplacement vertical et la vitesse du pneu arrière.

2. Dispositif d'estimation de profil de surface routière selon la revendication 1, dans lequel
l'unité de mise à jour met à jour une matrice de variance-covariance de bruit ajoutée aux variables d'état dans le modèle de simulation et une matrice de variance-covariance de bruit ajoutée aux valeurs d'observation des grandeurs physiques dans le modèle d'observation sur la base d'une différence entre les grandeurs physiques acquises par l'unité d'acquisition et les grandeurs physiques calculées par l'unité de calcul.

3. Dispositif d'estimation de profil de surface routière selon la revendication 1, dans lequel

la première fonction est une densité spectrale de puissance du profil de la surface routière calculée à partir des variables représentant le déplacement vertical et la vitesse du pneu avant, et
la seconde fonction est une densité spectrale de puissance du profil de la surface routière calculée à partir des variables représentant le déplacement vertical et la vitesse du pneu arrière.

4. Dispositif d'estimation de profil de surface routière selon la revendication 3, dans lequel
l'unité de détermination effectue une analyse de régression dans laquelle un logarithme de la densité spectrale de puissance calculée en utilisant des valeurs candidates pour la pluralité de paramètres est utilisé comme variable dépendante et un logarithme d'une fréquence est utilisé comme variable indépendante, et détermine s'il faut ou non employer les valeurs candidates sur la base d'une comparaison entre un coefficient de détermination dans l'analyse de régression et une valeur seuil.

5. Dispositif d'estimation de profil de surface routière selon la revendication 1, dans lequel

la première fonction est une valeur de variables représentant un déplacement vertical du pneu avant à un point temporel prédéterminé, et
la seconde fonction est une valeur de variables représentant un déplacement vertical du pneu arrière à un point temporel obtenu en ajoutant, au point temporel prédéterminé, une valeur qui est obtenue en divisant une distance entre le pneu avant et le pneu arrière par une vitesse du véhicule au point temporel prédéterminé.

6. Dispositif d'estimation de profil de surface routière selon l'une quelconque des revendications 1 à 5, dans lequel
l'unité de détermination détermine la pluralité de paramètres en utilisant un algorithme génétique.

7. Dispositif d'estimation de profil de surface routière selon l'une quelconque des revendications 1 à 6, dans lequel

le modèle de simulation est un modèle représentant l'évolution temporelle des variables d'état en utilisant une transformation linéaire des variables d'état et un bruit gaussien,
le modèle d'observation est un modèle pour calculer les valeurs d'observation des grandeurs physiques en utilisant la transformation linéaire des variables d'état et le bruit gaussien, et
l'unité de mise à jour met à jour les variables d'état de telle sorte qu'une erreur quadratique des variables d'état est minimisée.

8. Système d'estimation de profil de surface routière comprenant :

un véhicule (30) configuré pour circuler sur une surface routière ;
une unité de mesure configurée pour mesurer des grandeurs physiques représentant un mouvement du véhicule ; et
le dispositif d'estimation de profil de surface routière selon l'une quelconque des revendications précédentes.

**9.** Procédé d'estimation de profil de surface routière comprenant :

l'acquisition (S110) de grandeurs physiques représentant un mouvement d'un véhicule qui circule sur une surface routière ;

la prédiction (S112), sur la base d'un modèle de simulation (M1) incluant une pluralité de paramètres (P), d'une évolution temporelle de variables d'état incluant des variables représentant une inégalité de la surface routière sur laquelle le véhicule circule et des variables représentant les grandeurs physiques, dans lequel le modèle de simulation est un modèle de demi-voiture pour le véhicule ;

le calcul (S113) de valeurs d'observation des grandeurs physiques à partir des variables d'état prédites sur la base d'un modèle d'observation (M2) ;

la mise à jour (S114) des variables d'état par assimilation de données entre les grandeurs physiques acquises et les grandeurs physiques calculées ;

l'estimation (S117) de profils respectifs de la surface routière dans une première condition et une seconde condition sur la base des variables représentant l'inégalité de la surface routière, incluses dans les variables d'état ;

dans lequel

le profil de la surface routière estimé dans la première condition est un profil de la surface routière estimé sur la base de variables représentant un déplacement vertical et une vitesse d'un pneu avant du modèle de demi-voiture,

et

le profil de la surface routière estimé dans la seconde condition est un profil de la surface routière estimé sur la base de variables représentant un déplacement vertical et une vitesse d'un pneu arrière du modèle de demi-voiture ;

**caractérisé par**

la détermination de la pluralité de paramètres de telle sorte qu'une valeur absolue d'une fonction d'évaluation pour évaluer une différence entre le profil de la surface routière estimé dans la première condition et le profil de la surface routière estimé dans la seconde condition est égale ou inférieure à une valeur seuil, dans lequel la fonction d'évaluation inclut une différence entre une première fonction calculée à partir des variables représentant le déplacement vertical et la vitesse du pneu avant et une seconde fonction calculée à partir des variables représentant le déplacement vertical et la vitesse du pneu arrière.

**10.** Programme d'estimation de profil de surface routière amenant une unité de calcul prévue dans un dispositif d'estimation de profil de surface routière à fonctionner comme :

une unité d'acquisition (11) configurée pour acquérir (S110) des grandeurs physiques représentant un mouvement d'un véhicule qui circule sur une surface routière ;

une unité de prédiction (12) configurée pour prédire (S112), sur la base d'un mode de simulation (M1) incluant une pluralité de paramètres (P), une évolution temporelle de variables d'état incluant des variables représentant une inégalité de la surface routière sur laquelle le véhicule circule et des variables représentant les grandeurs physiques, dans lequel le modèle de simulation est un modèle de demi-voiture pour le véhicule ;

une unité de calcul (13) configurée pour calculer (S113) des valeurs d'observation des grandeurs physiques à partir des variables d'état prédites par l'unité de prédiction sur la base d'un modèle d'observation (M2) ;

une unité de mise à jour (14) configurée pour mettre à jour (S114) les variables d'état par assimilation de données entre les grandeurs physiques acquises par l'unité d'acquisition et les grandeurs physiques calculées par l'unité de calcul ;

une unité d'estimation (15) configurée pour estimer (S117) des profils respectifs de la surface routière dans une première condition et une seconde condition sur la base des variables représentant l'inégalité de la surface routière, incluses dans les variables d'état ; et

dans lequel

le profil de la surface routière estimé dans la première condition est un profil de la surface routière estimé sur la base de variables représentant un déplacement vertical et une vitesse d'un pneu avant du modèle de demi-voiture,

et

le profil de la surface routière estimé dans la seconde condition est un profil de la surface routière estimé sur la base de variables représentant un déplacement vertical et une vitesse d'un pneu arrière du modèle de demi-voiture ;

**caractérisé en ce que** le programme d'estimation de profil de surface routière amène en outre l'unité de calcul à fonctionner comme :

une unité de détermination configurée pour déterminer la pluralité de paramètres de telle sorte qu'une valeur absolue d'une fonction d'évaluation pour évaluer une différence entre le profil de la surface routière estimé dans la première condition et le profil de la surface routière estimé dans la seconde condition est égale ou inférieure à une valeur seuil, dans lequel

la fonction d'évaluation inclut une différence entre une première fonction calculée à partir des variables représentant le déplacement vertical et la vitesse du pneu avant et une seconde fonction calculée à partir des variables représentant le déplacement vertical et la vitesse du pneu arrière.

# Fig. 1

10

ROAD SURFACE
PROFILE
ESTIMATING
DEVICE

1

N

30

VEHICLE

20

SMARTPHONE

ACCELEROMETER — 21

ANGULAR
VELOCITY METER — 22

# Fig. 2

# Fig. 3

# Fig. 4

# Fig. 5

```
        ╭─────────────╮
        │    START    │
        │   PROCESS   │
        ╰─────────────╯
               │
               ▼
┌────────────────────────────────────────┐
│   SET CANDIDATE VALUES FOR PARAMETERS   │ ── S10
└────────────────────────────────────────┘
               │
               ▼
┌────────────────────────────────────────┐
│ │  ESTIMATE ROAD SURFACE PROFILES    │ │ ── S11
│ │  FOR FRONT TIRE AND REAR TIRE      │ │
└────────────────────────────────────────┘
               │
               ▼
┌────────────────────────────────────────┐
│   CALCULATE POWER SPECTRAL DENSITIES    │ ── S12
│     FOR FRONT TIRE AND REAR TIRE        │
└────────────────────────────────────────┘
               │
               ▼                            S13
         ╱────────────────────────────╲
        ╱   IS DIFFERENCE BETWEEN       ╲    YES
       ╱   INTEGRATED VALUES OF          ╲──────
       ╲   POWER SPECTRAL DENSITIES EQUAL TO ╱
        ╲  OR LESS THAN THRESHOLD VALUE? ╱
         ╲────────────────────────────╱
               │ NO
               ▼
┌────────────────────────────────────────┐
│   EXECUTE SELECTION, CROSSOVER,         │ ── S14
│   AND MUTATION ON PARAMETERS AND        │
│   THUS SET NEW CANDIDATE VALUES         │
└────────────────────────────────────────┘

               ▼                            S15
         ╱────────────────────────────╲
        ╱   IS DETERMINATION COEFFICIENT╲    YES
       ╱   IN REGRESSION ANALYSIS RELATED TO╲──────
       ╲   POWER SPECTRAL DENSITY EQUAL TO ╱
        ╲  OR LESS THAN THRESHOLD VALUE?  ╱
         ╲────────────────────────────╱
               │ NO
               ▼
┌────────────────────────────────────────┐
│         DETERMINE PARAMETERS            │ ── S16
└────────────────────────────────────────┘
               │
               ▼
        ╭─────────────╮
        │     END     │
        │   PROCESS   │
        ╰─────────────╯
```

# Fig. 6

```
        ┌─────────────────┐
        │     START       │
        │    PROCESS      │
        └─────────────────┘                    S11
                 │
                 ▼
  ┌───────────────────────────────┐
  │  ACQUIRE ACCELERATION AND     │ ─── S110
  │     ANGULAR VELOCITY          │
  └───────────────────────────────┘
                 │
                 ▼
  ┌───────────────────────────────┐
  │   CALCULATE DISPLACEMENT AND  │ ─── S111
  │     ANGULAR DISPLACEMENT      │
  └───────────────────────────────┘
                 │
                 ▼
  ┌─────────────────────────────────────────┐
  │      PREDICT TIME EVOLUTION OF          │ ─── S112
  │ STATE VARIABLE ON BASIS OF HALF CAR MODEL│
  └─────────────────────────────────────────┘
                 │
                 ▼
  ┌─────────────────────────────────────────┐
  │ CALCULATE ACCELERATION, ANGULAR VELOCITY,│ ─── S113
  │ DISPLACEMENT, AND ANGULAR DISPLACEMENT   │
  │      ON BASIS OF OBSERVATION MODEL       │
  └─────────────────────────────────────────┘
                 │
                 ▼
  ┌───────────────────────────────┐
  │    UPDATE STATE VARIABLE BY   │ ─── S114
  │   USING OPTIMUM KALMAN GAIN   │
  └───────────────────────────────┘
                 │
                 ▼
  ┌───────────────────────────────┐
  │  SMOOTH STATE VARIABLE ON BASIS OF │ ─── S115
  │   GAIN OF BACKPROPAGATION     │
  └───────────────────────────────┘
                 │
                 ▼
  ┌─────────────────────────────────────────┐
  │ UPDATE VARIANCE-COVARIANCE MATRICES OF  │ ─── S116
  │  NOISE ADDED TO STATE VARIABLE AND      │
  │  NOISE ADDED TO OBSERVATION VALUE       │
  └─────────────────────────────────────────┘
                 │
                 ▼
  ┌───────────────────────────────┐
  │  ESTIMATE ROAD SURFACE PROFILE │ ─── S117
  └───────────────────────────────┘
                 │
                 ▼
        ┌─────────────────┐
        │      END        │
        │    PROCESS      │
        └─────────────────┘
```

# Fig. 7

EP 3 882 880 B1

| Trial | $m_f$ | $m_r$ | $c_f$ | $c_r$ | $k_f$ | $k_r$ | $k_{tf}$ | $k_{tr}$ | $I_z$ | $L_f$ |
|---|---|---|---|---|---|---|---|---|---|---|
| First | -18.4 | 2.3 | 26.4 | -19.7 | 16.0 | 3.4 | 10.9 | -8.1 | -0.6 | -15.7 |
| Second | 5.1 | 17.4 | 12.4 | -4.5 | 2.9 | 13.2 | -1.2 | 0.2 | 3.6 | -2.2 |
| Third | 26.4 | 19.9 | 0.5 | -18.6 | -1.3 | -2.5 | 74.3 | 34.7 | -2.4 | -7.7 |
| Fourth | -40.0 | -7.4 | 60.0 | -1.1 | 20.6 | 48.0 | -9.5 | -9.7 | 26.9 | -7.1 |
| Fifth | -39.3 | -38.2 | 134.4 | 43.1 | 60.2 | 60.2 | -69.1 | -67.2 | 9.4 | -6.0 |

Fig. 8

EP 3 882 880 B1

# Fig. 9

EP 3 882 880 B1

Fig. 10

EP 3 882 880 B1

# Fig. 11

Fig. 12

# Fig. 13

START
PROCESS

↓

SET CANDIDATE VALUES FOR PARAMETERS —S20

↓

ESTIMATE ROAD SURFACE PROFILES
FOR FRONT TIRE AND REAR TIRE —S21

↓

S22
IS DIFFERENCE BETWEEN ROAD
SURFACE PROFILES EQUAL TO OR LESS THAN
THRESHOLD VALUE?  — YES

NO

↓

EXECUTE SELECTION, CROSSOVER,
AND MUTATION ON PARAMETERS AND
THUS SET NEW CANDIDATE VALUES —S23

↓

DETERMINE PARAMETERS —S24

↓

END
PROCESS

# Fig. 14

START
PROCESS

SET CANDIDATE VALUES FOR PARAMETERS — S30

ESTIMATE ROAD SURFACE PROFILES IN
CASES WHERE VEHICLE HAS TRAVELED AT
FIRST VELOCITY AND HAS TRAVELED AT
SECOND VELOCITY — S31

CALCULATE IRIS IN CASES WHERE VEHICLE HAS
TRAVELED AT FIRST VELOCITY AND HAS
TRAVELED AT SECOND VELOCITY — S32

S33

IS DIFFERENCE BETWEEN IRIS EQUAL
TO OR LESS THAN THRESHOLD VALUE?     YES

NO

EXECUTE SELECTION, CROSSOVER, AND
MUTATION ON PARAMETERS AND
THUS SET NEW CANDIDATE VALUES — S34

DETERMINE PARAMETERS — S35

END
PROCESS

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6132304 B

- WO 2018199286 A1